# EUROPEAN PATENT APPLICATION

(11) **EP 4 764 491 A1**
(43) Date of publication of application: **24.06.2026**
(21) Application number: 25221444.0
(22) Date of filing: 08.12.2025
(51) Int. Cl.: G01N 30/86, G01N 30/72

(54) **POST-DETECTION CHROMATOGRAPHIC PEAK VALIDATION**

(30) Priority: 17.12.2024 US 202418984352
(71) Applicant: THERMO FINNIGAN LLC, San Jose CA 95134 (US)
(72) Inventor: DILLON, James Timothy, Austin (US); CHEUNG, Kwok Leung, Milpitas (US); LIN, Xueying, Fremont (US); TIMOKHINA, Gulnara, Palo Alto (US)
(74) Representative: Boult Wade Tennant LLP

(57) **Abstract**

Systems/techniques are provided for facilitating post-detection chromatographic peak validation. In various embodiments, a system can cause a chromatography device coupled to a mass spectrometer to scan a specimen, thereby yielding a chromatogram and mass spectra. In various aspects, the system can identify, via a peak detection algorithm, a plurality of purported peaks in the chromatogram. In various instances, the system can separate, via execution of a machine learning classifier on respective ones of the plurality of purported peaks, the plurality of purported peaks into a set of valid peaks and a set of invalid peaks. In various cases, the system can perform a mass spectrometry analysis on first portions of the mass spectra that correspond to the set of valid peaks but not on second portions of the mass spectra that correspond to the set of invalid peaks.

## Description

### BACKGROUND

The field of chromatography and mass spectrometry can involve the performance of analytical algorithms that consume large amounts of time.

### SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate post-detection chromatographic peak validation are described.

According to one or more embodiments, a system is provided. In various aspects, the system can comprise a processor that can execute computer-executable components stored in a non-transitory computer-readable memory. In various instances, the computer-executable components can comprise a scan component that can cause a chromatography device coupled to a mass spectrometer to scan a specimen, thereby yielding a chromatogram and mass spectra. In various cases, the computer-executable components can comprise a peak component that can identify, via a peak detection algorithm, a plurality of purported peaks in the chromatogram. In various aspects, the computer-executable components can comprise a model component that can separate, via execution of a machine learning classifier on respective ones of the plurality of purported peaks, the plurality of purported peaks into a set of valid peaks and a set of invalid peaks. In various instances, the computer-executable components can comprise an execution component that can perform a mass spectrometry analysis on first portions of the mass spectra that correspond to the set of valid peaks but not on second portions of the mass spectra that correspond to the set of invalid peaks.

According to one or more embodiments, a computer-implemented method is provided. In various embodiments, the computer-implemented method can comprise causing, by a device operatively coupled to a processor, a chromatography device coupled to a mass spectrometer to scan a specimen, thereby yielding a chromatogram and mass spectra. In various aspects, the computer-implemented method can comprise identifying, by the device and via a peak detection algorithm, a plurality of purported peaks in the chromatogram. In various instances, the computer-implemented method can comprise separating, by the device and via execution of a machine learning classifier on respective ones of the plurality of purported peaks, the plurality of purported peaks into a set of valid peaks and a set of invalid peaks. In various cases, the computer-implemented method can comprise performing, by the device, a mass spectrometry analysis on first portions of the mass spectra that correspond to the set of valid peaks but not on second portions of the mass spectra that correspond to the set of invalid peaks.

According to one or more embodiments, a computer program product for facilitating post-detection chromatographic peak validation is provided. In various embodiments, the computer program product can comprise a non-transitory computer-readable memory having program instructions embodied therewith. In various aspects, the program instructions can be executable by a processor to cause the processor to cause a chromatography device coupled to a mass spectrometer to scan a specimen, thereby yielding a chromatogram and mass spectra. In various instances, the program instructions can be further executable to cause the processor to identify, via a peak detection algorithm, a plurality of purported peaks in the chromatogram. In various cases, the program instructions can be further executable to cause the processor to separate, via execution of a machine learning classifier on respective ones of the plurality of purported peaks, the plurality of purported peaks into a set of valid peaks and a set of invalid peaks. In various aspects, the program instructions can be further executable to cause the processor to perform a mass spectrometry analysis on first portions of the mass spectra that correspond to the set of valid peaks but not on second portions of the mass spectra that correspond to the set of invalid peaks.

### DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.
FIG. 1 illustrates an example, non-limiting block diagram of a scientific instrument module in accordance with various embodiments described herein.
FIG. 2 illustrates an example, non-limiting flow diagram of a computer-implemented method in accordance with various embodiments described herein.
FIG. 3 illustrates a block diagram of an example, non-limiting system that facilitates post-detection chromatographic peak validation in accordance with one or more embodiments described herein.
FIG. 4 illustrates a block diagram of an example, non-limiting system including a chromatogram and a plurality mass spectra that facilitates post-detection chromatographic peak validation in accordance with one or more embodiments described herein.
FIG. 5 illustrates an example, non-limiting block diagram showing a chromatogram and a plurality of mass spectra in accordance with one or more embodiments described herein.
FIG. 6 illustrates a block diagram of an example, non-limiting system including a plurality of purported peaks that facilitates post-detection chromatographic peak validation in accordance with one or more embodiments described herein.
FIG. 7 illustrates an example, non-limiting block diagram showing how a plurality of purported peaks can be obtained in accordance with one or more embodiments described herein.
FIG. 8 illustrates a block diagram of an example, non-limiting system including a machine learning classifier, a set of valid peaks, and a set of invalid peaks that facilitates post-detection chromatographic peak validation in accordance with one or more embodiments described herein.
FIG. 9 illustrates an example, non-limiting block diagram showing how a machine learning classifier can separate a plurality of purported peaks into a set of valid peaks and a set of invalid peaks in accordance with one or more embodiments described herein.
FIG. 10 illustrates a block diagram of an example, non-limiting system including a training component and a training dataset that facilitates post-detection chromatographic peak validation in accordance with one or more embodiments described herein.
FIG. 11 illustrates an example, non-limiting block diagram of a training dataset in accordance with one or more embodiments described herein.
FIG. 12 illustrates an example, non-limiting block diagram showing how a machine learning classifier can be trained in accordance with one or more embodiments described herein.
FIG. 13 illustrates example, non-limiting experimental results in accordance with one or more embodiments described herein.
FIG. 14 illustrates a block diagram of an example, non-limiting operating environment in which one or more embodiments described herein can be facilitated.
FIG. 15 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

A mass spectrometer coupled to a chromatography device can be considered as a type of scientific instrument that can be deployed in a scientific, laboratory, research, or clinical operational context or setting, so as to determine the chemical composition or make-up of unknown samples or specimens. To facilitate such chemical composition determination, the mass spectrometer or chromatography device can comprise a complex arrangement of actuatable parts (e.g., ion sources, ion lenses, heaters, coolers, columns, ovens, injectors, mass analyzers, fluid valves, fluid pumps, circuit switches), sensors (e.g., ion detectors, voltmeters, thermistors, potentiometers, pressure gauges), or consumables (e.g., carrier fluids, calibrants, filters).

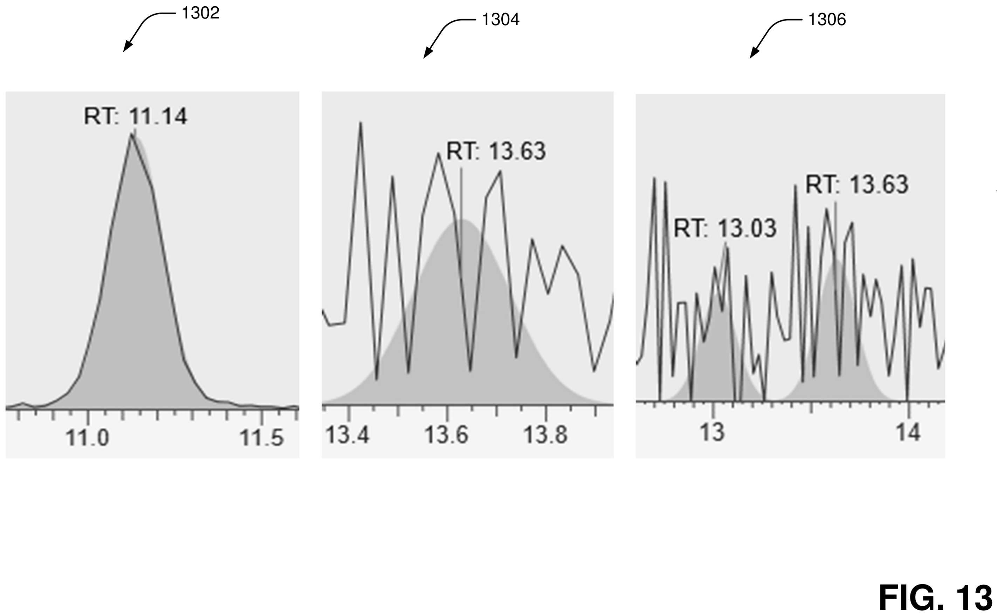

During a scan, a portion of any given sample can be injected into the chromatography device and thus pass through whatever constituent pieces of hardware (e.g., oven-heated column) that make up the chromatography device. The chromatography device can be structured or designed so as to cause different chemical species (e.g., molecules, compounds, analytes) within the injected portion of the sample to elute (e.g., to be physically separated or isolated from the remainder of the injected portion of the sample) at different times. How much time is required for any particular chemical species to elute can be referred to as a retention time (denoted as "RT" along the horizontal axes in FIG. 13) of that particular chemical species. The chromatography device can be configured to generate a chromatogram, which can be considered as a graph of intensity (e.g., magnitude of detector signal recorded by the chromatography device) as a function of retention time. As respective chemical species elute in or from the chromatography device, those species can enter the mass spectrometer and thus pass through whatever constituent pieces of hardware (e.g., mass analyzer) that make up the mass spectrometer. The mass spectrometer can be structured or designed to separate (or, in some cases, to measure without physically separating) the individual ions that make up any particular chemical species according to the mass-to-charge ratios of those ions. Such separation or measurement can yield a mass spectrum for the particular chemical species, which can be considered as a graph of intensity (e.g., magnitude of detector signal recorded by the mass spectrometer) as a function of mass-to-charge ratio.

In various instances, the mass spectrometer can be considered as generating a respective mass spectrum for each point (e.g., for each time-intensity tuple) in the chromatogram. However, it can be the case that not all of the mass spectra recorded by the mass spectrometer are of interest. Indeed, in various aspects, only the mass spectra of whatever points in the chromatogram form identifiable peaks can be of interest. After all, peaks in the chromatogram can correspond to elution, and thus high concentrations, of respective chemical species, whereas valleys in the chromatogram can correspond to elution of no chemical species (e.g., valleys can be the product of mere noise captured by the detector of the chromatography device). So, those respective chemical species can be identified or determined by analyzing in any suitable fashion (e.g., via metabolomic algorithms, via proteomic algorithms, via statistical algorithms, via library searches or library score computations) whatever mass spectra correspond to the peaks in the chromatogram.

It can often be the case that whatever analysis is performed on the mass spectra corresponding to chromatographic peaks is highly time-consuming (e.g., can take as long as several minutes or hours, depending upon the complexity or resolution of the mass spectra). Accordingly, avoiding the performance of such analysis on mass spectra that correspond to valleys or other non-peak regions of the chromatogram can be considered as highly desirable. Indeed, not only does the performance of such analysis on such mass spectra not yield valuable compositional information regarding the sample, but the performance of such analysis on such mass spectra can be considered as an expensive or burdensome waste of time and resources that could otherwise have been better spent analyzing mass spectra that correspond to chromatographic peaks (e.g., analyzing non-peak mass spectra does not yield compositional information and has a large opportunity cost).

Unfortunately, existing techniques for identifying chromatographic peaks - such as thresholding (e.g., any chromatographic point above a threshold intensity level is labeled as a peak), local maxima detection (e.g., any chromatographic point that has a threshold amount more intensity than a threshold number of neighboring points is labeled as a peak), derivative computation (e.g., peak labeling is based on first or second derivatives of intensity with respect to retention time), curve fitting (e.g., sequences of chromatographic points that resemble a bell-curve shape are labeled as peaks), machine learning segmentation (e.g., a machine learning segmenter receives as input a chromatogram and determines which sequences of points in the chromatogram qualify as peaks), or combinations thereof - often experience false positives (e.g., suffer from an unacceptably high rate of misidentifying valleys or other non-peak regions as chromatographic peaks). Thus, when existing techniques are implemented, excessive amounts of time and computing resources are wasted on analyzing mass spectra that do not actually correspond to chromatographic peaks. That is, existing techniques can be considered as being afflicted with various technical problems.

Accordingly, systems or techniques that can ameliorate such technical problems can be considered as desirable.

Various embodiments described herein can address one or more of these technical problems. One or more embodiments described herein can include systems, computer-implemented methods, apparatus, or computer program products that can facilitate post-detection chromatographic peak validation. In particular, the inventors of various embodiments described herein realized that the false positives of existing techniques can be diminished, reduced, filtered-out, or otherwise handled by training a machine learning classifier to serve as a post-detection peak validator. In other words, no matter what specific technique or combination of techniques is chosen to detect or identify peaks in a given chromatogram, whatever purported peaks are detected or identified by such techniques can be subsequently labeled as valid or invalid by the machine learning classifier. In still other words, the machine learning classifier can be considered as serving as a redundancy, backstop, filter, or sanity-checker that distinguishes between true-positive peak detections and false-positive peak detections, regardless of the specific technique or combination of techniques that is used to detect peaks. Thus, the machine learning classifier can be considered as an added or supplemental layer of security that weeds out erroneously-detected peaks, such that time and computing resources need not be spent on analyzing whatever mass spectra correspond to those erroneously-detected peaks.

Various embodiments described herein can be considered as a computerized tool (e.g., any suitable combination of computer-executable hardware or computer-executable software) that can be electronically installed on or otherwise with respect to a chromatograph-equipped mass spectrometer and that can facilitate post-detection chromatographic peak validation. In various aspects, such computerized tool can comprise a scan component, a peak component, a model component, or an execution component.

In various embodiments, the chromatograph-equipped mass spectrometer can be considered as comprising a mass spectrometer that is operatively coupled in any suitable fashion to a chromatography device. In various aspects, the mass spectrometer can comprise any suitable constituent hardware. As some non-limiting examples, the mass spectrometer can comprise any suitable ion beam emitter (e.g., matrix assisted laser desorption/ionization (MALDI) source, electrospray ionization (ESI) source, atmospheric pressure chemical ionization (APCI) source, atmospheric pressure photoionization (APPI) source, inductively coupled plasma (ICP) source, electron ionization source, chemical ionization source, photoionization source, glow discharge ionization source, thermospray ionization source, combo-source), any suitable mass analyzer (e.g., quadrupole mass filter analyzer, ion trap analyzer, quadrupole ion trap analyzer, time-of-flight (TOF) analyzer, electrostatic trap (e.g., ORBITRAP) mass analyzer, Fourier transform ion cyclotron resonance (FT-ICR) mass analyzer), any suitable ion detector (e.g., electron multiplier detector, microchannel plate detector, image charge detector, Faraday cup detector), or any suitable ion optics equipment (e.g., ion focusing lenses, ion guides, ion deflectors). Likewise, in various instances, the chromatography device can comprise any suitable constituent hardware (e.g., gas chromatography hardware, liquid chromatography hardware, ion chromatography hardware). As some non-limiting examples, the chromatography device can comprise any suitable sample injector (e.g., hot injectors such as split, splitless, direct, or gas sampling valve (GSV); cold injectors such as cold on column (COC) or programmed temperature vaporization (PTV); injection syringe; infusion syringe; vaporizer; nebulizer), any suitable chromatography column (e.g., comprising any suitable absorbent packing material or any suitable capillary with different stationary phase films), any suitable column oven or heater, or any suitable carrier fluid flow devices (e.g., fluid valves, fluid pumps). In various aspects, any suitable autosampler or auxiliary sampling devices can pair with chromatography hardware to perform sample preparation and introduction (e.g., gas and liquid sampling valve, headspace autosampler, solid phase microextraction (SPME), headspace-SPME; in-tube extraction-dynamic headspace (ITEX-DHS), thermal desorbers (TD), purge and trap samplers (P&T), pyrolyzers). In various instances, carrier gas species can non-limitingly include helium, hydrogen, nitrogen, argon, methane, or any suitable combination thereof. In various cases, when given any sample, the sample can be injected into the chromatography device, the sample can be separated into various compositional components by the chromatography device, and those various compositional components can be ionized and subsequently analyzed by the mass spectrometer (e.g., the mass spectrometer can record relative abundances of sample ions as a function of mass-to-charge ratio). In various aspects, the chromatograph-equipped mass spectrometer can be loaded with a sample.

In various embodiments, the computerized tool can electronically access the chromatograph-equipped mass spectrometer. That is, the computerized tool can electronically interface or communicate with the chromatograph-equipped mass spectrometer, such that any components of the computerized tool can electronically interact with (e.g., send electronic commands to, read electronic signals from) the chromatograph-equipped mass spectrometer.

In various embodiments, the scan component of the computerized tool can electronically cause the chromatograph-equipped mass spectrometer to inject a portion of the loaded sample. The scan component can accordingly cause the chromatograph-equipped mass spectrometer to scan that portion of the loaded sample. In various aspects, the chromatograph-equipped mass spectrometer can perform such scan using any suitable scanning protocol (e.g., full scan, selected ion monitoring, split injection, splitless injection). In any case, such scanning can yield a chromatogram and a plurality of mass spectra. The chromatogram can be a plurality of time-intensity tuples (e.g., a graph or plot of measured intensities as a function of retention time), whereas each of the plurality of mass spectra can be a plurality of ratio-intensity tuples (e.g., a graph or plot of measured intensities as a function of mass-to-charge ratio). Each intensity value of the chromatogram can correspond to a respective one of the plurality of mass spectra.

In various embodiments, the peak component of the computerized tool can electronically identify a plurality of purported peaks within the chromatogram. In various aspects, the peak component can accomplish such identification by applying any suitable peak detection techniques to the chromatogram, such as thresholding, local maxima detection, derivative computations, curve fitting, machine learning segmentation, or any suitable combination thereof. In various instances, each of the plurality of purported peaks can be a respective, contiguous string or sequence of time-intensity tuples that are inferred, predicted, or otherwise determined to collectively form a respective peak within the chromatogram and thereby to represent a respective chemical species within the loaded sample. Note that it is possible that one or more of the plurality of purported peaks can be incorrect. In other words, it is possible that whatever peak detection techniques that the peak component applies to the chromatogram can accidentally mischaracterize certain non-peak sequences of time-intensity tuples in the chromatogram as being peaks. In still other words, it is possible that those peak detection techniques can erroneously determine that one or more given regions of the chromatogram correspond to respective chemical species in the loaded sample when, in reality, such one or more given regions do not actually correspond to any chemical species in the loaded sample. Such mischaracterization can be due to noisy fluctuations in detector signals of the chromatograph-equipped mass spectrometer (e.g., chromatographic noise can distract or otherwise impede the peak detection techniques employed by the peak component).

In various embodiments, the model component of the computerized tool can electronically store, maintain, control, or otherwise access a machine learning classifier. In various aspects, the machine learning classifier can exhibit any suitable artificial intelligence architecture. For instance, in some cases, the machine learning classifier can exhibit any suitable deep learning internal architecture. For example, the machine learning classifier can include any suitable numbers of any suitable types of layers (e.g., input layer, one or more hidden layers, output layer, any of which can be convolutional layers, dense layers, long short-term memory (LSTM) layers, transformer layers, non-linearity layers, pooling layers, batch normalization layers, or padding layers). As another example, the machine learning classifier can include any suitable numbers of neurons in various layers (e.g., different layers can have the same or different numbers of neurons as each other). As yet another example, the machine learning classifier can include any suitable activation functions (e.g., softmax, sigmoid, hyperbolic tangent, rectified linear unit) in various neurons (e.g., different neurons can have the same or different activation functions as each other). As still another example, the machine learning classifier can include any suitable interneuron connections or interlayer connections (e.g., forward connections, skip connections, recurrent connections). In other instances, the machine learning classifier can exhibit any other suitable artificial intelligence architecture, such as a support vector machine, a linear or logistic regression model, a naïve Bayes model, or a decision tree.

Regardless of its specific internal architecture, the machine learning classifier can be configured to dichotomously or binarily label purported chromatographic peaks as being either valid or invalid. That is, the machine learning classifier can be configured to receive as input any given chromatographic peak (or any suitable properties or characteristics thereof, such as height or width) and to produce as output a classification label that indicates that the given chromatographic peak is valid (e.g., has been properly identified as a peak) or instead invalid (e.g., has been improperly identified as a peak).

Accordingly, in various embodiments, the model component can execute the machine learning classifier on each of the plurality of purported peaks that have been identified by the peak component, and such execution can yield a plurality of validity classification labels. For instance, suppose that the machine learning classifier exhibits a deep learning architecture. In such case, for any particular purported peak in the plurality of purported peaks, the model component can feed that particular purported peak to an input layer of the machine learning classifier, that particular purported peak can complete a forward pass through one or more hidden layers of the machine learning classifier, and an output layer of the machine learning classifier can compute a respective validity classification label for the particular purported peak based on activations provided by the one or more hidden layers. Note that such validity classification label can be any suitable electronic data that indicates either: that the particular purported peak is valid or has otherwise been correctly identified as a chromatographic peak; or that the particular purported peak is invalid or has otherwise been incorrectly identified as a chromatographic peak. In other words, the machine learning classifier can be considered as determining whether or not whatever numerical patterns (which may be subtle or not at all visually noticeable or conspicuous) that are exhibited by the time-intensity tuples that make up the particular purported peak are characteristic or indicative of a true chromatographic peak.

By executing the machine learning classifier in this way on each of the plurality of purported peaks, the model component can be considered as separating or dividing the plurality of purported peaks into: a set of valid peaks; and a set of invalid peaks. In various aspects, the set of valid peaks can be whichever of the plurality of purported peaks that have been labeled as valid by the machine learning classifier. In contrast, the set of invalid peaks can be whichever of the plurality of purported peaks that have been labeled as invalid by the machine learning classifier. In various cases, the set of valid peaks can be considered or otherwise referred to as being true positives produced by whatever peak detection techniques were used by the peak component, whereas the set of invalid peaks can be considered or otherwise referred to as being false positives produced by whatever peak detection techniques were used by the peak component.

In various embodiments, the execution component of the computerized tool can electronically perform any suitable type of statistical, numerical, or computational analysis on whichever of the plurality of mass spectra correspond to the set of valid peaks. On the other hand, the execution component can refrain from performing such analysis on whichever of the plurality of mass spectra correspond to the set of invalid peaks. In other words, the execution component can ignore or discard whichever mass spectra correspond to regions of the chromatogram that were incorrectly or mistakenly identified as chromatographic peaks. In this way, valuable compositional information regarding the loaded specimen can be obtained or derived (e.g., due to the analysis of the mass spectra that correspond to the set of valid peaks) without excessive consumption of time or computing resources (e.g., since time and resources are not spent or wasted on analyzing the mass spectra that correspond to the set of invalid peaks).

Accordingly, various embodiments described herein can be considered as a type of software validator or evaluator that double-checks whatever peaks are detected in the chromatogram, so that the mass spectra of erroneously detected peaks can be disregarded during downstream analysis. Such embodiments can save significant amounts of time and resources compared to existing techniques which are prone to wasting time and resources analyzing the mass spectra of false-positive peaks. Furthermore, such embodiments can be implemented, no matter what specific type of peak detection technique is utilized or chosen.

In order for various embodiments described herein to function properly, the machine learning classifier can first be trained. In various aspects, the computerized tool can include a training component that can facilitate such training (e.g., in supervised fashion), as described later herein.

Various embodiments described herein can be employed to use hardware or software to solve problems that are highly technical in nature (e.g., to facilitate post-detection chromatographic peak validation), that are not abstract and that cannot be performed as a set of mental acts by a human. Further, some of the processes performed can be performed by a specialized computer (e.g., chromatography device and mass spectrometer which can inject and scan portions of samples; machine learning classifier which can be composed of specific types of neural network layers) for carrying out defined acts related to chromatography and mass spectrometry.

For example, such defined acts can include: causing, by a device operatively coupled to a processor, a chromatography device coupled to a mass spectrometer to scan a specimen, thereby yielding a chromatogram and mass spectra; identifying, by the device and via a peak detection algorithm, a plurality of purported peaks in the chromatogram; separating, by the device and via execution of a machine learning classifier on respective ones of the plurality of purported peaks, the plurality of purported peaks into a set of valid peaks and a set of invalid peaks; and performing, by the device, a mass spectrometry analysis on first portions of the mass spectra that correspond to the set of valid peaks but not on second portions of the mass spectra that correspond to the set of invalid peaks. In various aspects, for a first purported peak in the plurality of purported peaks, the device can feed the first purported peak or one or more properties of the first purported peak as input to the machine learning classifier, and the machine learning classifier can produce as output a classification label indicating whether the first purported peak is a valid peak or an invalid peak.

Such defined acts are inherently computerized. Indeed, chromatography devices and mass spectrometers are highly-technical computerized devices comprising specific computerized hardware (e.g., temperature sensors, pressure sensors, voltage sensors, ion beam emitters, ion focusing lenses, mass analyzers, ion detectors, oven-heated columns, autosamplers). Neither a chromatograph-equipped mass spectrometer nor the operations that it performs can be implemented by the human mind, or by a human with pen and paper, in any reasonable or practicable way without computers (e.g., neither the human mind nor a human with pen and paper can inject portions of samples into or through the oven-heated columns, ionizers, mass analyzers, or detectors of a chromatograph-equipped mass spectrometer). Additionally, machine learning classifiers (e.g., artificial neural networks) are also inherently computerized constructs comprising specific software-oriented architectures (e.g., input layers, hidden layers, or output layers, any of which can be made up of trainable or non-trainable internal parameters such as convolutional layers or LSTM layers). Machine learning classifiers cannot be trained or executed by the human mind, or by humans with mere pen and paper, in any reasonable or practicable way without computers.

Moreover, various embodiments described herein can integrate into a practical application various teachings relating to chromatography and mass spectrometry. As explained above, a chromatography device can generate a chromatogram whose peaks represent the elution, and thus presence, of respective chemical species, and a mass spectrometer can generate a mass spectrum for each point in the chromatogram (e.g., as those eluted chemical species pass through the mass spectrometer). The mass spectra corresponding to the peaks in the chromatogram can be considered as being of interest (e.g., as containing valuable information regarding the compositions of respective chemical species). In contrast, the mass spectra corresponding to non-peak regions of the chromatogram can instead be considered as being not of interest. Thus, any time or computing resources spent on analyzing the mass spectra that correspond to non-peak regions can be considered as wasted. So, it can be desired to first selectively identify the peaks in the chromatogram and to then analyze only whatever mass spectra correspond to those peaks. Unfortunately, existing techniques for facilitating peak detection (e.g., thresholding, local maxima detection, derivative computation, curve fitting, machine learning segmentation) can be prone to false positives. That is, such peak detection techniques can misidentify more than an acceptable number of non-peak chromatographic regions as being peaks. Accordingly, when existing techniques are implemented, some time or computing resources are often spent on analyzing mass spectra of non-peak regions that have been erroneously detected as peaks, which can be undesirable. In other words, existing techniques can be considered as suffering from one or more technical problems.

Various embodiments described herein can help to ameliorate such technical problems by facilitating post-detection chromatographic peak validation. In particular, various embodiments described herein can be considered as an automated validator that double-checks the work performed by upstream peak detection techniques. More specifically, when given a chromatogram, any suitable peak detection techniques (e.g., thresholding, local maxima detection, derivative computation, curve fitting, machine learning segmentation) can be applied to the chromatogram, thereby identifying or detecting multiple purported peaks within the chromatogram. As explained above, the peak detection techniques can be mistaken, meaning that one or more of those multiple purported peaks can actually be non-peak regions of the chromatogram. In various aspects, those misidentified non-peak regions can be ferreted or filtered out by a machine learning classifier as described herein. In particular, that machine learning classifier can be trained to receive as input a purported peak (or any suitable numerical properties thereof such as peak height or peak width) and to produce as output a classification label for that purported peak, where the classification label indicates that the purported peak is valid or instead that the purported peak is invalid. In various aspects, the machine learning classifier can be considered as a redundancy or second line of defense that double-checks the work performed by the peak detection techniques. Note that the machine learning classifier is not itself a peak detector (e.g., it does not receive as input a chromatogram and identify as output one or more peaks in the chromatogram). Instead, the machine learning classifier can be considered as a peak discriminator that is trained to receive as input a string or sequence of time-intensity tuples that has been predicted to form a chromatographic peak and to determine as output whether or not that string or sequence of time-intensity tuples really or truly does constitute a chromatographic peak. In any case, whatever the likelihood of a non-peak region being falsely identified as a chromatographic peak by the peak detection technique, the likelihood that such non-peak region is also misidentified as being valid by the machine learning classifier can be extremely low (e.g., since the machine learning classifier can be different from, independent of, or not a copy of the peak detection techniques). Accordingly, the machine learning classifier can be considered as a filter, validator, discriminator, or sanity-checker that removes false positives from the outputs of the peak detection techniques. In this way, time or resources need not be wasted on analyzing mass spectra that correspond to falsely-detected chromatographic peaks. Thus, various embodiments described herein can save time and computing resources as compared to existing techniques.

Additionally, the counter-intuitive character of various embodiments described herein must be emphasized. It can always be desired to reduce the number of false positives produced by a peak detection technique (e.g., thresholding, local maxima detection, derivative computation, curve fitting, machine learning segmentation). Conventional wisdom for reducing such false positives teaches that the peak detection technique itself should be improved or advanced. The present inventors contravened this conventional wisdom by realizing that false positives can alternatively be reduced via a validator or discriminator that is employed downstream of the peak detection technique. In other words, a person who wanted to reduce the number of false positives produced by a peak detection technique would have attempted to enhance the peak detection technique itself (e.g., would have attempted to come up with better-tuned thresholds or better derivative formulas); such person certainly would not have thought to reduce the number of false positives produced by the peak detection technique by implementing a completely separate computational entity (e.g., the herein-described machine learning classifier) downstream of the peak detection algorithm. In still other words, various embodiments described herein can be considered as a clever, unusual, or counter-intuitive solution to the problem of false positives mistakenly identified by chromatographic peak detection techniques. Stated differently, various embodiments described herein can be considered as a clever, unusual, or counter-intuitive use of a machine learning classifier.

For at least these reasons, various embodiments described herein can be considered as a concrete and tangible technical improvement in the field of chromatography and mass spectrometry. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., sample injectors, ion beam emitters, ion focusing lenses, carrier fluid valves/pumps) of real-world scientific instruments (e.g., chromatography devices, mass spectrometers, autosamplers).

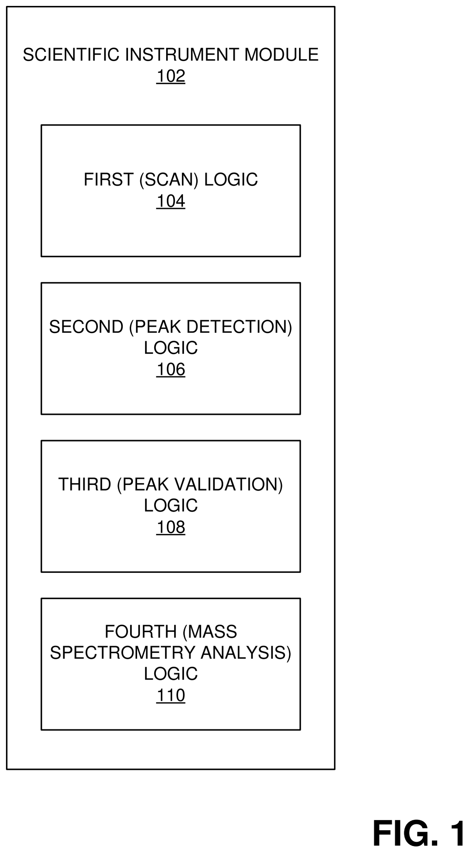

FIG. 1 illustrates an example, non-limiting block diagram of a scientific instrument module 102 in accordance with various embodiments described herein.

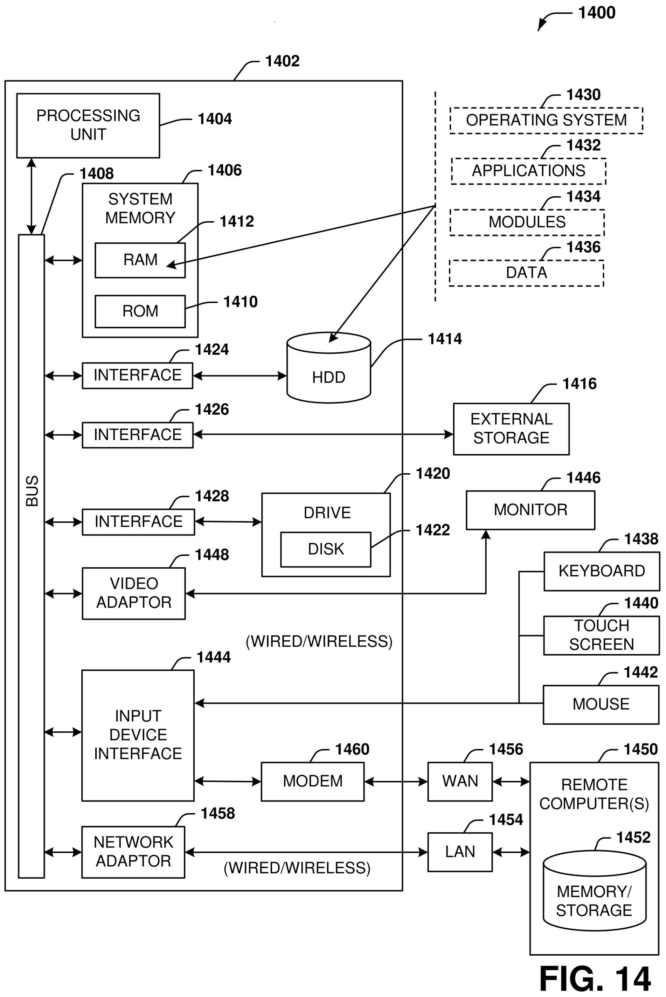

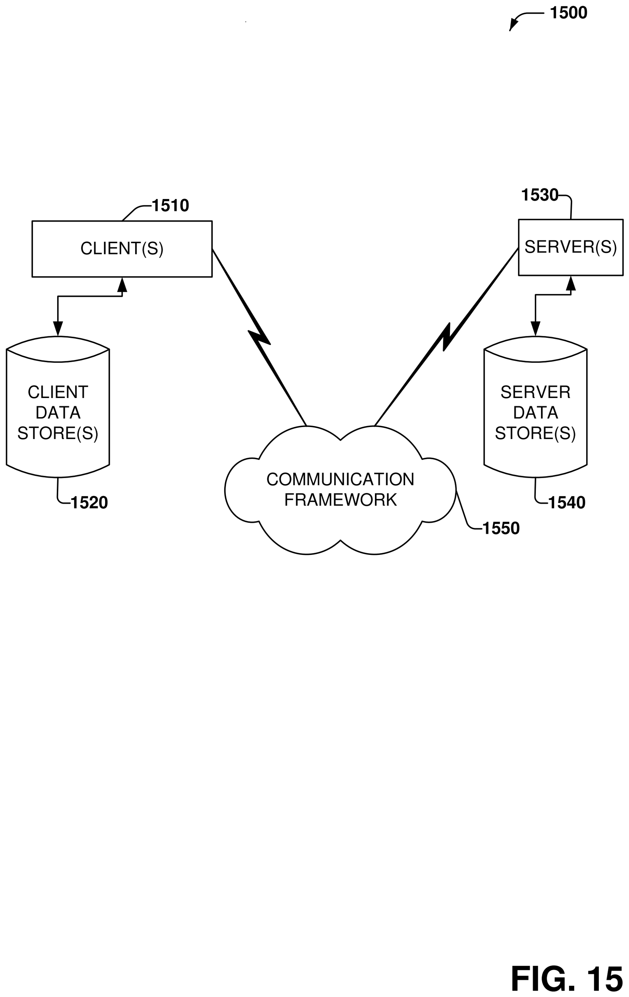

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIG. 14, and examples of systems or networks of interconnected computing devices, in which the scientific instrument module 102 may be implemented across one or more of the computing devices, are discussed herein with reference to FIG. 15.

The scientific instrument module 102 can include first logic 104, second logic 106, third logic 108, and fourth logic 110. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, a scientific instrument can be a mass spectrometer that is operatively coupled to a chromatography device. In such case, the scientific instrument can measure or capture chromatograms (e.g., relative species abundance as a function of retention time) or mass spectra (e.g., relative ion abundance as a function of mass-to-charge ratio) of the analytical sample.

In various embodiments, the first logic 104 can cause the scientific instrument to scan the analytical sample. Such scan can produce a chromatogram and mass spectra corresponding to the analytical sample.

In various embodiments, the second logic 106 can identify a plurality of purported peaks in the chromatogram, via any suitable peak detection technique, such as thresholding, curve fitting, or machine learning segmentation.

In various embodiments, the third logic 108 can separate the plurality of purported peaks into a set of valid peaks and a set of invalid peaks, via execution of a machine learning classifier. In particular, the machine learning classifier can be configured to take as input any purported peak or properties thereof and to produce as output a dichotomous label specifying whether that purported peak is valid (e.g., a true positive produced by the logic 106) or invalid (e.g., a false positive produced by the logic 106). In some cases, the machine learning classifier can be considered as verifying, evaluating, or double-checking the work performed by the peak detection technique, so as to identify instances in which non-peak portions of the chromatogram are mistakenly detected as peaks by the peak detection technique.

In various embodiments, the fourth logic 110 can perform a mass spectrometry analysis (e.g., any suitable type of statistical or numerical processing) on whichever mass spectra correspond to the set of valid peaks and can refrain from performing the mass spectrometry analysis on whichever mass spectra instead correspond to the set of invalid peaks. Thus, time and resources need not be wasted on analyzing mass spectra that correspond to mistakenly-detected peaks in the chromatogram.

Accordingly, the scientific instrument module 102 can facilitate post-detection chromatographic peak validation.

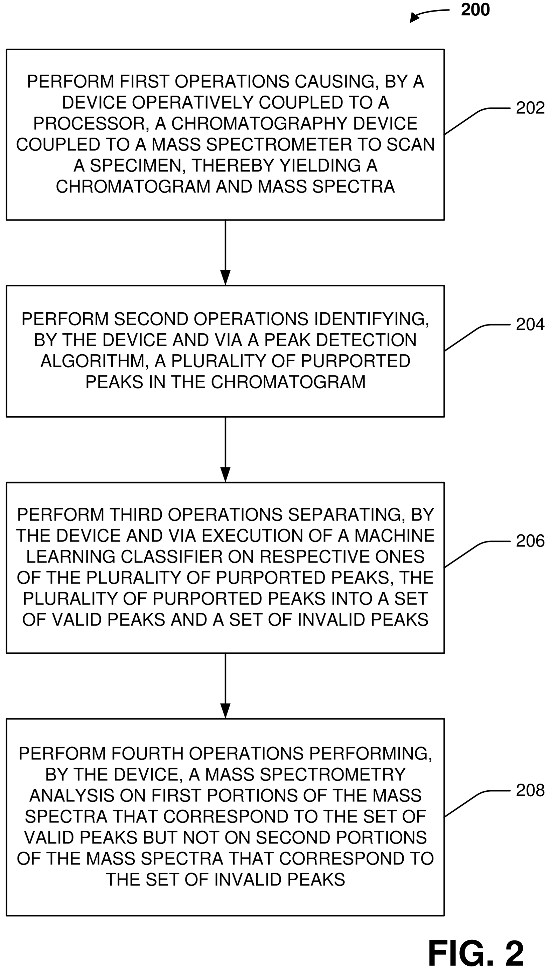

FIG. 2 is an example, non-limiting flow diagram of a computer-implemented method 200 in accordance with various embodiments described herein. The operations of the computer-implemented method 200 may be used in any suitable setting to perform any suitable operations (e.g., can be performed by or used in conjunction with any of the various modules, computing devices, or graphical user interfaces described with respect to of FIGs. 1, 14, or 15). Operations are illustrated once each and in a particular order in FIG. 2, but the operations may be reordered or repeated as desired and appropriate (e.g., different operations performed may be performed in parallel, as suitable).

In various aspects, act 202 can include performing first operations causing, by a device operatively coupled to a processor, a chromatography device coupled to a mass spectrometer to scan a specimen, thereby yielding a chromatogram and mass spectra. In various cases, the first logic 104 can perform or otherwise facilitate act 202.

In various instances, act 204 can include performing second operations identifying, by the device and via a peak detection algorithm, a plurality of purported peaks in the chromatogram. In various cases, the second logic 106 can perform or otherwise facilitate act 204.

In various instances, act 206 can include performing third operations separating, by the device and via execution of a machine learning classifier on respective ones of the plurality of purported peaks, the plurality of purported peaks into a set of valid peaks and a set of invalid peaks. In various cases, the third logic 108 can perform or otherwise facilitate act 206.

In various instances, act 208 can include performing fourth operations performing, by the device, a mass spectrometry analysis on first portions of the mass spectra that correspond to the set of valid peaks but not on second portions of the mass spectra that correspond to the set of invalid peaks. In various cases, the fourth logic 110 can perform or otherwise facilitate act 208.

Accordingly, the computer-implemented method 200 can facilitate post-detection chromatographic peak validation.

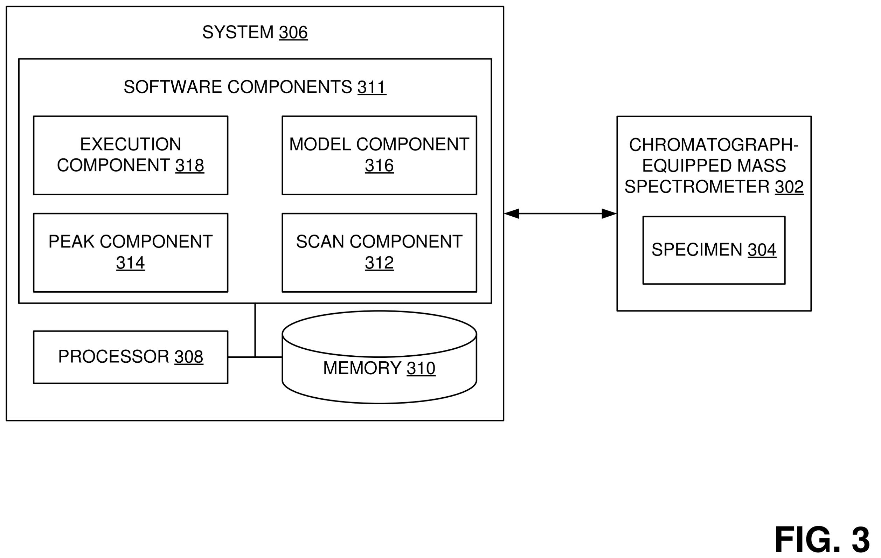

FIG. 3 illustrates a block diagram of an example, non-limiting system that can facilitate post-detection chromatographic peak validation in accordance with one or more embodiments described herein.

In various embodiments, there can be a chromatograph-equipped mass spectrometer 302. In various aspects, the chromatograph-equipped mass spectrometer 302 can, as its name suggests, be made up of or otherwise contain a chromatography device that is operatively coupled to a mass spectrometer.

In various embodiments, the chromatography device of the chromatograph-equipped mass spectrometer 302 can be any suitable chromatography device, such as a gas chromatography device or a liquid chromatography device. In various aspects, the chromatography device can comprise any suitable constituent hardware for separating an analytical sample into two or more compositional parts. As a non-limiting example, the constituent hardware can comprise an injector, an oven-heated column, and carrier fluid valves or pumps. In various aspects, the carrier fluid valves or pumps can cause carrier fluid (e.g., an inert gas, or a water-organic-solvent mixture) to flow through the chromatography device. In various instances, the injector can inject an analytical sample (e.g., a mixture or solution to be measured or analyzed) into the flowing carrier fluid. In various cases, the injected analytical sample can be carried by the flowing carrier fluid through the oven-heated column, which can contain any suitable absorbent packing material or stationary phase film. In various aspects, different compositional parts (e.g., different chemical elements, molecules, analytes, or species) of the analytical sample can interact differently or uniquely with the absorbent packing material or stationary phase film, thereby causing the different compositional parts of the analytical sample to have different flow rates through the oven-heated column. Due to such different flow rates, the different compositional parts can be considered as being physically separated from each other.

In various aspects, the mass spectrometer of the chromatograph-equipped mass spectrometer 302 can be any suitable mass spectrometer. In various instances, the mass spectrometer can comprise any suitable constituent hardware for measuring ion spectra of analytical samples. As a non-limiting example, the constituent hardware can comprise an ion beam emitter, ion optics equipment, a mass analyzer, and an ion detector. In various cases, the ion beam emitter can receive from the chromatography device a compositional part of the analytical sample and can ionize that compositional part into an ion beam. The ion beam emitter can facilitate this via any suitable ionization technique, such as electron ionization, chemical ionization, matrix assisted laser desorption ionization, electrospray ionization, photoionization, or inductively coupled plasma ionization, any of which can be implemented in a vacuum or at atmospheric pressure. In various aspects, the ion optics equipment can channel or steer the ion beam produced by the ion beam emitter through the mass analyzer and to the ion detector. Non-limiting examples of such ion optics equipment can include ion focusing lenses, ion guides, or ion deflectors. In various instances, the mass analyzer can separate or sort whatever ions are present in the ion beam according to their mass-to-charge ratios. Non-limiting examples of the mass analyzer can include quadrupole mass analyzers, time-of-flight mass analyzers, magnetic sector mass analyzers, electrostatic sector mass analyzers, quadrupole ion trap mass analyzers, or ion cyclotron resonance mass analyzers. In various cases, the ion detector can electronically detect or measure the relative abundances of whatever ions strike it. Non-limiting examples of the ion detector can include electron multiplier ion detectors or Faraday cup ion detectors.

In various embodiments, the chromatograph-equipped mass spectrometer 302 can be currently or presently loaded with a specimen 304. In other words, the specimen 304 can be physically within any suitable injector or autosampler of the chromatograph-equipped mass spectrometer 302, such that the chromatograph-equipped mass spectrometer 302 can be able to inject portions of the specimen 304 for analysis or scanning. In various aspects, the specimen 304 can be any suitable mixture, solution, or colloid for which mass spectrometry analysis is desired. As a non-limiting example, the specimen 304 can be a food or beverage mixture, solution, or colloid. As another non-limiting example, the specimen 304 can be a pharmaceutical or medicinal mixture, solution, or colloid. As yet another non-limiting example, the specimen 304 can be a soil, water, air, scat, or other environmental mixture, solution, or colloid. In various instances, the specimen 304 can have or exhibit any suitable stability or shelf-life. Indeed, in some cases, the specimen 304 can be a stable mixture, solution, or colloid that has a shelf-life of days, weeks, months, or even years. In other cases, the specimen 304 can instead be an unstable mixture, solution, or colloid that has a shelf-life of mere hours or minutes.

In any case, it can be desired to perform any suitable mass spectrometry analysis on or with respect to the specimen 304. As described herein, a system 306 can facilitate or otherwise accomplish such objective.

In various aspects, the system 306 can comprise a processor 308 (e.g., computer processing unit, microprocessor) and a non-transitory computer-readable memory 310 that is operably or operatively or communicatively connected or coupled to the processor 308. The non-transitory computer-readable memory 310 can store computer-executable instructions which, upon execution by the processor 308, can cause the processor 308 or other components of the system 306 (e.g., scan component 312, peak component 314, model component 316, execution component 318) to perform one or more acts. In various embodiments, the non-transitory computer-readable memory 310 can store computer-executable components (e.g., scan component 312, peak component 314, model component 316, execution component 318), and the processor 308 can execute the computer-executable components.

In various embodiments, the system 306 can be electronically coupled or integrated to or with the chromatograph-equipped mass spectrometer 302 via any suitable wired or wireless electronic connection. So, the system 3056 can electronically access the chromatograph-equipped mass spectrometer 302. That is, the system 306 can electronically communicate or otherwise electronically interact with (e.g., transmit electronic instructions or commands to, receive electronic data from) the chromatograph-equipped mass spectrometer 302. Accordingly, any component of the system 306 can interact with, communicate with, or otherwise manipulate the chromatograph-equipped mass spectrometer 302.

In various embodiments, the system 306 can comprise a scan component 312. In various aspects, the scan component 312 can, as described herein, cause the chromatograph-equipped mass spectrometer 302 to generate a chromatogram and a plurality of mass spectra for the specimen 304.

In various embodiments, the system 306 can comprise a peak component 314. In various instances, the peak component 314 can, as described herein, identify a plurality of purported peaks within the chromatogram.

In various embodiments, the system 306 can comprise a model component 316. In various cases, the model component 316 can separate, via execution of a machine learning classifier, the plurality of purported peaks into a set of valid peaks and a set of invalid peaks.

In various embodiments, the system 306 can comprise an execution component 318. In various aspects, the execution component 318 can, as described herein, perform any suitable mass spectrometry analysis on whatever mass spectra correspond to the set of valid peaks but not on mass spectra that correspond to the set of invalid peaks.

Note that, in various instances, the scan component 312, the peak component 314, the model component 316, and the execution component 318 can collectively be considered as being one or more software components 311 of the system 306. In various aspects, it should be appreciated that the one or more software components 311 are described primarily herein as comprising four components (e.g., the scan component 312, the peak component 314, the model component 316, and the execution component 318) for ease of explanation and illustration. However, the one or more software components 311 are not limited to being implemented as exactly such four components in every embodiment. Indeed, in some embodiments, the functionalities described herein of such four components can be combined in any suitable fashions, so as to be implemented in or by fewer than four components (e.g., in some cases, a single component can perform all of the functionalities that are described herein with respect to the scan component 312, the peak component 314, the model component 316, and the execution component 318). In other embodiments, the functionalities described herein of such four components can instead be distributed, separated, split, or fragmented in any suitable fashions, so as to be implemented in or by more than four components (e.g., two or more components can facilitate the functionalities that are performable by the scan component 312; two or more components can facilitate the functionalities that are performable by the peak component 314; two or more components can facilitate the functionalities that are performable by the model component 316; two or more components can facilitate the functionalities that are performable by the execution component 318).

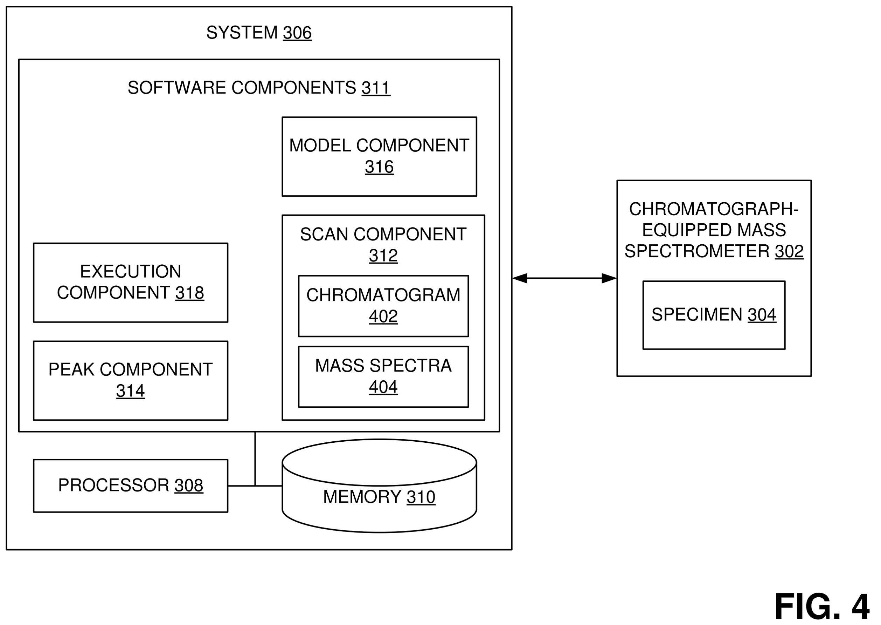

FIG. 4 illustrates a block diagram of an example, non-limiting system including a chromatogram and a plurality of mass spectra that can facilitate post-detection chromatographic peak validation in accordance with one or more embodiments described herein.

In various embodiments, the scan component 312 can electronically instruct, electronically command, or otherwise electronically cause the chromatograph-equipped mass spectrometer 302 to scan the specimen 304 according to any suitable chromatography or spectrometry scanning protocol. As a non-limiting example, the chromatograph-equipped mass spectrometer 302 can perform on the specimen 304 any suitable type of full scan or survey scan protocol, in which a broad scan across a defined range or interval of mass-to-charge ratios is conducted. As another non-limiting example, the chromatograph-equipped mass spectrometer 302 can perform on the specimen 304 any suitable type of selected ion monitoring (SIM) protocol, in which only a small number of specific mass-to-charge ratios are targeted. As yet another non-limiting example, the chromatograph-equipped mass spectrometer 302 can perform on the specimen 304 any suitable type of multiple reaction monitoring (MRM) protocol, in which precursor ions are fragmented via collision-induced dissociation and are selectively targeted along with their fragmented ions. As even another non-limiting example, the chromatograph-equipped mass spectrometer 302 can perform on the specimen 304 a scan having any suitable type of temperature ramping or temperature programming of an oven-heated column, so as to separate or elute compounds of varying volatilities. As still another non-limiting example, the chromatograph-equipped mass spectrometer 302 can perform on the specimen 304 any suitable type of splitless protocol, in which the entirety of the injected portion of the specimen 304 is sent to the oven-heated column. As another non-limiting example, the chromatograph-equipped mass spectrometer 302 can perform on the specimen 304 any suitable type of split protocol, in which less than the entirety of the injected portion of the specimen 304 is sent to the oven-heated column. As even another non-limiting example, the chromatograph-equipped mass spectrometer 302 can perform on the specimen 304 any suitable type of isocratic elution protocol, in which a mobile phase composition of the chromatograph-equipped mass spectrometer 302 remains constant throughout the scan. As yet another non-limiting example, the chromatograph-equipped mass spectrometer 302 can perform on the specimen 304 any suitable type of gradient elution protocol, in which the mobile phase composition changes throughout the scan.

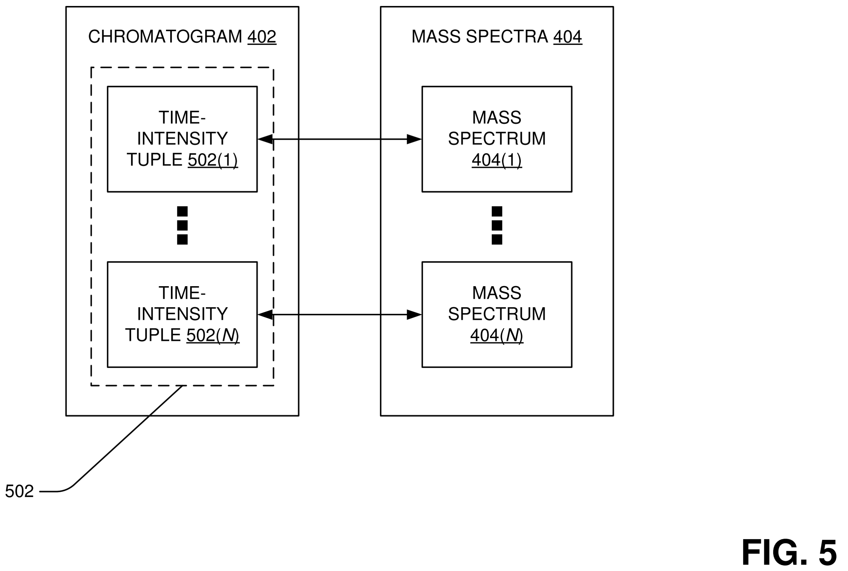

No matter what scanning protocol is implemented, such scanning can cause the chromatograph-equipped mass spectrometer 302 to produce a chromatogram 402 and a plurality of mass spectra 404. In various instances, the chromatogram 402 can be a graph or plot of intensity versus retention time for the specimen 304, and each of the plurality of mass spectra 404 can be a graph or plot of intensity versus mass-to-charge ratio. Non-limiting aspects are described with respect to FIG. 5.

FIG. 5 illustrates an example, non-limiting block diagram showing the chromatogram 402 and the plurality of mass spectra 404 in accordance with one or more embodiments described herein.

In various aspects, the chromatogram 402 can include a plurality of time-intensity tuples 502. In various instances, the plurality of time-intensity tuples 502 can have a total of *n* tuples, for any suitable positive integer *n:* a time-intensity tuple 502(1) to a time-intensity tuple *502(n).* In various cases, each of the plurality of time-intensity tuples 502 can be a two-element vector, the first element of which can be a scalar that indicates a respective retention time, and the second element of which can be a scalar that indicates how much intensity or concentration was measured by a chromatographic detector of the chromatograph-equipped mass spectrometer 302 at that respective retention time. As a non-limiting example, the time-intensity tuple 502(1) can be a vector indicating a first retention time and a first intensity value that was measured at that first retention time. As another non-limiting example, the time-intensity tuple 502(n) can be a vector indicating an *n*-th retention time and an *n*-th intensity value that was measured at that *n*-th retention time. In various aspects, it can be the case that no two of the plurality of time-intensity tuples 502 have the same retention time as each other. Moreover, in various instances, it can be the case that the plurality of time-intensity tuples 502 is ordered chronologically from lowest retention time to highest retention time. Accordingly, the chromatogram 402 can be considered as a timeseries of intensities that are measured by the chromatography device of the chromatograph-equipped mass spectrometer 302.

In various aspects, the plurality of mass spectra 404 can respectively correspond (e.g., in one-to-one fashion) with the plurality of time-intensity tuples 502. Accordingly, since the plurality of time-intensity tuples 502 can have *n* tuples, the plurality of mass spectra 404 can have *n* spectra: a mass spectrum 404(1) to a mass spectrum 404(*n*). In various instances, each of the plurality of mass spectra 404 can be a graph or plot of ion intensity versus mass-to-charge ratio that was measured by a spectrometric detector of the chromatograph-equipped mass spectrometer 302 at a respective retention time. As a non-limiting example, the mass spectrum 404(1) can correspond to the time-intensity tuple 502(1). So, the mass spectrum 404(1) can be a first graph or plot of ion intensity versus mass-to-charge-ratio that the mass spectrometer of the chromatograph-equipped mass spectrometer 302 produced for whatever chemical species (if any) eluted at the first retention time. As another non-limiting example, the mass spectrum 404(*n*) can correspond to the time-intensity tuple 502(*n*). Thus, the mass spectrum 404(*n*) can be an *n*-th graph or plot of ion intensity versus mass-to-charge-ratio that the mass spectrometer of the chromatograph-equipped mass spectrometer 302 produced for whatever chemical species (if any) eluted at the *n*-th retention time.

Note how some of the plurality of mass spectra 404 can be considered as containing valuable information regarding the compositional make-up of the specimen 304, whereas others of the plurality of mass spectra 404 can be considered as containing no such valuable information. In particular, whatever chemical species that make up the specimen 304 can elute from or in the chromatograph-equipped mass spectrometer 302 at respective retention times. Such elutions can manifest or appear as peaks within the chromatogram 402. In other words, a retention time at which the chromatogram 402 shows a peak can be considered as representing a time at which a respective chemical species eluted, appeared, or was otherwise present with appreciable concentration, whereas a retention time at which the chromatogram 402 shows no peak can be considered as representing a time at which no chemical species eluted, appeared, or were otherwise present with appreciable concentration. So, whichever of the plurality of mass spectra 404 that correspond to peaks in the chromatogram 402 can be considered as containing valuable compositional information about the chemical species of the specimen 304. In contrast, whichever of the plurality of mass spectra 404 that do not correspond to peaks in the chromatogram 402 can be considered as not containing valuable compositional information about the chemical species of the specimen 304.

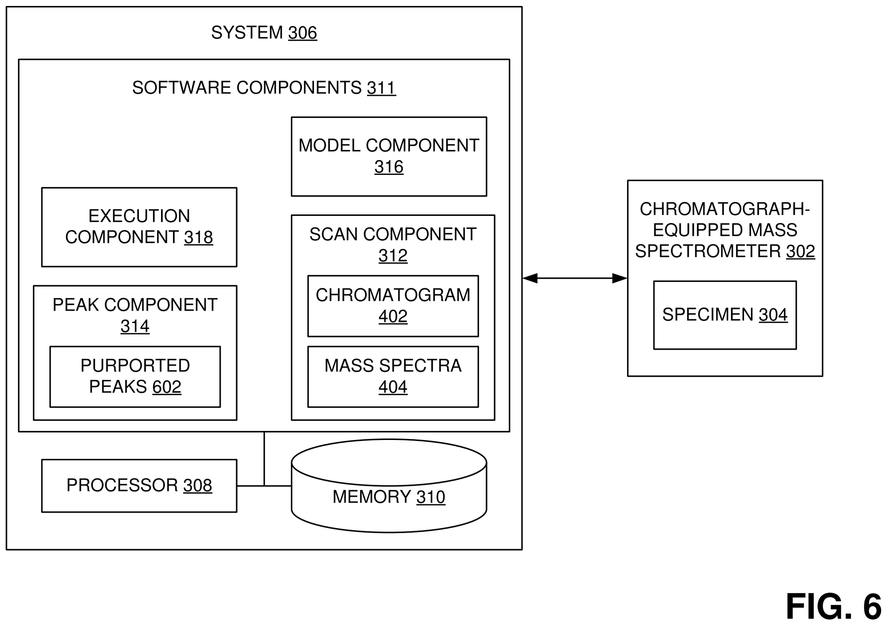

FIG. 6 illustrates a block diagram of an example, non-limiting system including a plurality of purported peaks that can facilitate post-detection chromatographic peak validation in accordance with one or more embodiments described herein.

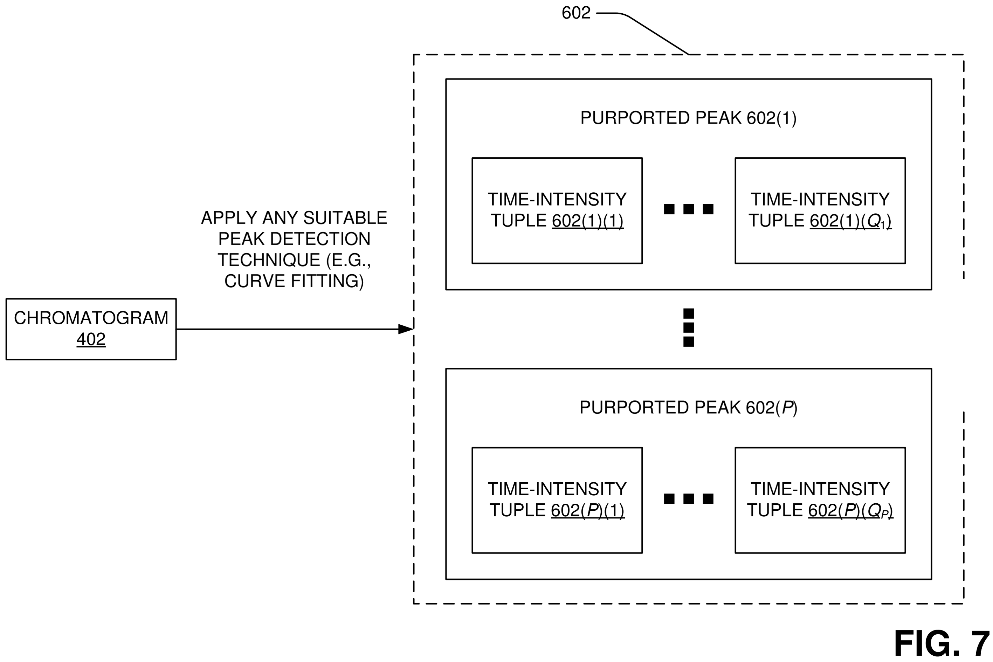

In various embodiments, the peak component 314 can electronically identify or electronically detect a plurality of purported peaks 602 within the chromatogram 402. Non-limiting aspects are described with respect to FIG. 7.

FIG. 7 illustrates an example, non-limiting block diagram showing how the plurality of purported peaks 602 can be obtained in accordance with one or more embodiments described herein.

In various embodiments, the peak component 314 can electronically apply any suitable peak detection technique on or to the chromatogram 402.

As a non-limiting example, the peak component 314 can apply any suitable type of thresholding peak detection technique on or to the chromatogram 402. In such case, the peak component 314 can be considered as searching through the chromatogram 402 for temporally contiguous strings or sequences of intensities that exceed any suitable intensity threshold value. In other words, any recorded intensity value in the chromatogram 402 that is above the intensity threshold value can be considered as being part of a peak, whereas any recorded intensity value in the chromatogram 402 that is below the intensity threshold value can instead be considered as not being part of a peak.

As another non-limiting example, the peak component 314 can apply any suitable type of local maxima peak detection technique on or to the chromatogram 402. In such case, the peak component 314 can be considered as searching through the chromatogram 402 for intensities that are greater than their neighboring intensities. In other words, any recorded intensity value in the chromatogram 402 that is above both its preceding intensity value and its subsequent intensity value can be considered as being part of a peak (e.g., as being the apex of a peak), whereas any recorded intensity value in the chromatogram 402 that is not greater than both its preceding and subsequent intensity values can instead be considered as not being part of a peak.

As yet another non-limiting example, the peak component 314 can apply any suitable type of derivative peak detection technique on or to the chromatogram 402. In such case, the peak component 314 can be considered as searching through the chromatogram 402 for temporally contiguous strings or sequences of intensities whose first-order or second-order derivatives (e.g., whose slopes or concavities) satisfy any suitable defined equalities or inequalities. For instance, a string or sequence of intensities in the chromatogram 402 whose concavities are negative and whose slopes pass through zero can be considered as forming a peak, whereas a string or sequence of intensity values in the chromatogram 402 whose concavities are not negative or whose slopes do not pass through zero can instead be considered as not forming a peak.

As still another non-limiting example, the peak component 314 can apply any suitable type of curve fitting peak detection technique on or to the chromatogram 402. In such case, the peak component 314 can be considered as searching through the chromatogram 402 for temporally contiguous strings or sequences of intensities that can be approximated (e.g., via least sum of squares) by a defined curve with adjustable parameters, such as a Gaussian curve (e.g., the adjustable parameters of which can be amplitude, mean, or standard deviation), a Lorentzian curve (e.g., the adjustable parameters of which can be height, center, and half-width at half-maximum), or a polynomial curve (e.g., whose adjustable parameters can be coefficients of respective polynomial terms). For instance, a string or sequence of intensities in the chromatogram 402 to which a defined curve can be fit with less than a threshold amount of deviation or error can be considered as forming a peak, whereas a string or sequence of intensity values in the chromatogram 402 to which a defined curve cannot be fit with less than a threshold amount of deviation or error can instead be considered as not forming a peak.

As even another non-limiting example, the peak component 314 can apply any suitable type of machine learning peak detection technique on or to the chromatogram 402. In such case, the peak component 314 can be considered as feeding the chromatogram 402 as input to a machine learning segmenter that is configured to specify one or more temporally contiguous strings or sequences of intensities that it believes qualify as or constitute peaks.

As another non-limiting example, the peak component 314 can apply any suitable combination of any of the aforementioned to or on the chromatogram 402.

No matter which specific peak detection technique or combination of peak detection techniques is chosen or selected, application of such peak detection to the chromatogram 402 can yield the plurality of purported peaks 602. In various aspects, the plurality of purported peaks 602 can include a total of *p* purported peaks, for any suitable positive integer *p* < *n:* a purported peak 602(1) to a purported peak 602(*p*). In various instances, each of the plurality of purported peaks 602 can be a temporally contiguous string or sequence of intensity values from the chromatogram 402 that the peak component 314 has concluded is a peak. In other words, each of the plurality of purported peaks 602 can be a set of time-intensity tuples from the chromatogram 402 that are adjacent to each other and that the peak component 314 has determined represents the elution of a respective chemical species of the specimen 304. As a non-limiting example, the purported peak 602(1) can be made up of a total of *q*₁ tuples: a time-intensity tuple 602(1)(1) to a time-intensity tuple 602(1)(*q*₁). In various aspects, those *q*₁ tuples can be temporally contiguous, meaning that they can be chronologically adjacent or otherwise next to each other in the chromatogram 402. In other words, there can be no time-intensity tuple in the chromatogram 402 that is chronologically located in between the time-intensity tuple 602(1)(1) and the time-intensity tuple 602(1)(*q*₁) but that does not belong to the purported peak 602(1). As another non-limiting example, the purported peak 602(*p*) can be made up of a total of *qₚ* tuples: a time-intensity tuple 602(*p*)(1) to a time-intensity tuple 602(*p*)(*qₚ*). Just as above, those *qₚ* tuples can be temporally contiguous, meaning that they can be chronologically adjacent or otherwise next to each other in the chromatogram 402. In other words, there can be no time-intensity tuple in the chromatogram 402 that is chronologically located in between the time-intensity tuple 602(*p*)(1) and the time-intensity tuple 602(*p*)(*qₚ*) but that does not belong to the purported peak 602(*p*).

Note that it is possible (e.g., due to noise) for some of the plurality of purported peaks to be false, inaccurate, incorrect, or otherwise not actually or truly peaks within the chromatogram 402. Indeed, the plurality of purported peaks 602 can be considered as merely being whatever portions, segments, or sections of the chromatogram 402 that whatever peak detection technique implemented by the peak component 314 believes or concludes are peaks. Because whatever peak detection technique implemented by the peak component 314 can have some non-zero likelihood of producing false positives, it is possible that one or more of the plurality of purported peaks 602 are false positives (e.g., do not actually represent the elution of respective chemical species of the specimen 304). For at least this reason, the term "purported" can be considered as appropriate.

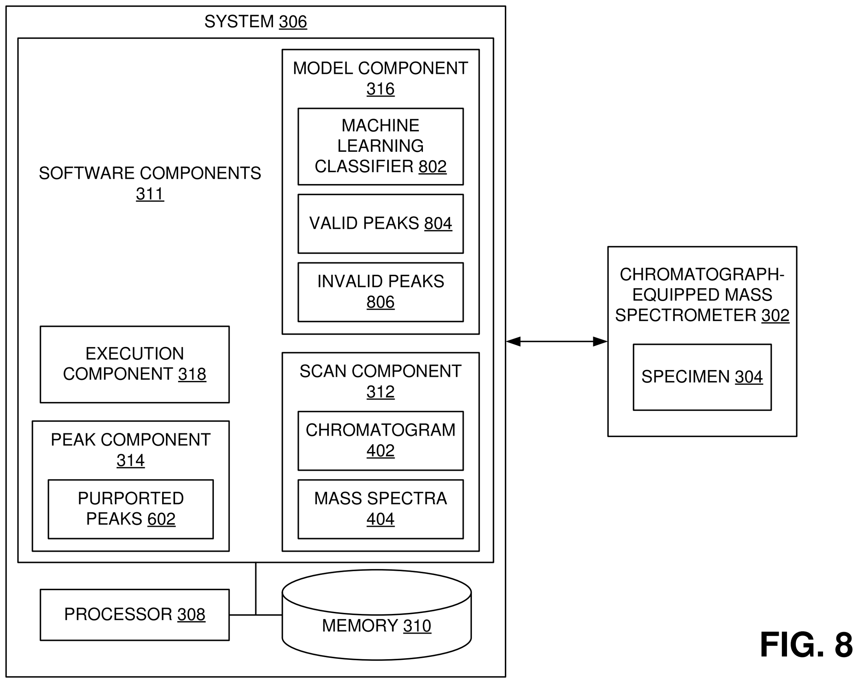

FIG. 8 illustrates a block diagram of an example, non-limiting system including a machine learning classifier, a set of valid peaks, and a set of invalid peaks that can facilitate post-detection chromatographic peak validation in accordance with one or more embodiments described herein.

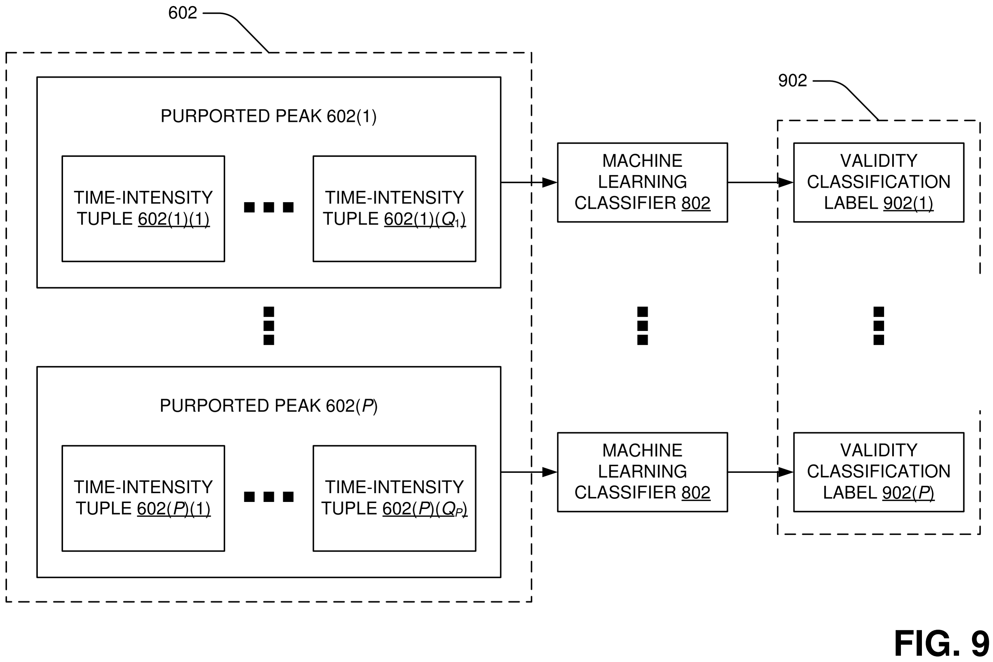

In various embodiments, the model component 316 can electronically store, electronically maintain, electronically control, or otherwise electronically access a machine learning classifier 802. In various instances, the model component 316 can leverage the machine learning classifier 802, so as to separate, divide, or divvy the plurality of purported peaks 602 into a set of valid peaks 804 and a set of invalid peaks 806. Various non-limiting aspects are described with respect to FIG. 9.

FIG. 9 illustrates an example, non-limiting block diagram showing how the machine learning classifier 802 can separate the plurality of purported peaks 602 into the set of valid peaks 804 and the set of invalid peaks 806 in accordance with one or more embodiments described herein.

In various embodiments, the machine learning classifier 802 can exhibit any suitable type, style, construction, or design of internal architecture. For instance, the machine learning classifier 802 can exhibit any suitable deep learning internal architecture.

Indeed, in various cases, the machine learning classifier 802 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be LSTM layers, whose learnable or trainable parameters can be input-state weight matrices or hidden-state weight matrices. As yet another example, any of such input layer, one or more hidden layers, or output layer can be transformer layers, whose learnable or trainable parameters can be single-head or multi-head attention blocks or other weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

However, this is merely a non-limiting example. In various embodiments, the machine learning classifier 802 can exhibit any other suitable type of artificial intelligence architecture. As a non-limiting example, the machine learning classifier 802 can exhibit any suitable type of support vector machine architecture. As another non-limiting example, the machine learning classifier 802 can exhibit any suitable type of naïve Bayes architecture. As yet another non-limiting example, the machine learning classifier 802 can exhibit any suitable type of linear regression architecture. As still another non-limiting example, the machine learning classifier 802 can exhibit any suitable type of logistic regression architecture. As even another non-limiting example, the machine learning classifier 802 can exhibit any suitable type of decision tree or random forest architecture. As another non-limiting example, the machine learning classifier 802 can exhibit any suitable combination of any of the above-mentioned architectures.

Regardless of the specific internal architecture (e.g., the specific numbers, types, or organizations of layers) that is implemented within the machine learning classifier 802, the machine learning classifier 802 can be configured as a discriminator that distinguishes between valid and invalid peaks. In other words, the machine learning classifier 802 can be configured to receive as input any given string or sequence of time-intensity tuples that purports to be a chromatographic peak and to produce as output a classification label that indicates whether or not that string or sequence of time-intensity tuples truly or actually constitutes a chromatographic peak. Accordingly, the model component 316 can, in various aspects, electronically execute the machine learning classifier 802 on each of the plurality of purported peaks 602, so as to yield a plurality of validity classification labels 902.

As a non-limiting example, the model component 316 can execute the machine learning classifier 802 on the purported peak 602(1), and such execution can cause the machine learning classifier 802 to produce a validity classification label 902(1). More specifically, suppose that the machine learning classifier 802 has a deep learning internal architecture. In various aspects, the model component 316 can concatenate the *q*₁ time-intensity tuples that make up the purported peak 602(1) together and can feed that concatenation to the input layer of the machine learning classifier 802. In various instances, that concatenation can complete a forward pass through the one or more hidden layers of the machine learning classifier 802. In various cases, the output layer of the machine learning classifier 802 can calculate or compute the validity classification label 902(1) based on whatever activation maps or features maps are produced by the one or more hidden layers. In various aspects, the validity classification label 902(1) can be any suitable electronic data (e.g., one or more scalars, one or more vectors, one or more matrices, one or more tensors, one or more character strings, or any suitable combination thereof) that binarily or dichotomously indicates either that: the time-intensity tuple 602(1)(1) to the time-intensity tuple 602(1)(*q*₁) constitute a valid, accurate, or correct chromatographic peak; or the time-intensity tuple 602(1)(1) to the time-intensity tuple 602(1)(*q*₁) do not constitute a valid, accurate, or correct chromatographic peak. In other words, the machine learning classifier 802 can be considered as evaluating whether or not whatever numerical patterns are exhibited by the *q*₁ time-intensity tuples that make up the purported peak 602(1) seem, appear, or otherwise are similar to those which the machine learning classifier 802 has learned are characteristic of actual or true chromatographic peaks, and the validity classification label 902(1) can be considered as a piece of electronic data that indicates the result of that evaluation. In still other words, the peak component 314 can be considered as having determined that the time-intensity tuple 602(1)(1) to the time-intensity tuple 602(1)(*q*₁) collectively form a chromatographic peak, and the machine learning classifier 802 can be considered as double-checking that determination of the peak component 314.

As another non-limiting example, the model component 316 can execute the machine learning classifier 802 on the purported peak 602(*p*), and such execution can cause the machine learning classifier 802 to produce a validity classification label 902(*p*). More specifically, suppose that the machine learning classifier 802 has a deep learning internal architecture. In various aspects, the model component 316 can concatenate the *qₚ* time-intensity tuples that make up the purported peak 602(p) together and can feed that concatenation to the input layer of the machine learning classifier 802. In various instances, that concatenation can complete a forward pass through the one or more hidden layers of the machine learning classifier 802. In various cases, the output layer of the machine learning classifier 802 can calculate or compute the validity classification label 902(*p*) based on whatever activation maps or features maps are produced by the one or more hidden layers. As above, the validity classification label 902(*p*) can be any suitable electronic data (e.g., one or more scalars, one or more vectors, one or more matrices, one or more tensors, one or more character strings, or any suitable combination thereof) that binarily or dichotomously indicates either that: the time-intensity tuple 602(*p*)(1) to the time-intensity tuple 602(*p*)(*qₚ*) constitute a valid, accurate, or correct chromatographic peak; or the time-intensity tuple 602(*p*)(1) to the time-intensity tuple 602(*p*)(*qₚ*) do not constitute a valid, accurate, or correct chromatographic peak. In other words, the machine learning classifier 802 can be considered as evaluating whether or not whatever numerical patterns are exhibited by the *qₚ* time-intensity tuples that make up the purported peak 602(*p*) seem, appear, or otherwise are similar to those which the machine learning classifier 802 has learned are characteristic of actual or true chromatographic peaks, and the validity classification label 902(*p*) can be considered as a piece of electronic data that indicates the result of that evaluation. In still other words, the peak component 314 can be considered as having determined that the time-intensity tuple 602(*p*)(1) to the time-intensity tuple 602(*p*)(*qₚ*) collectively form a chromatographic peak, and the machine learning classifier 802 can be considered as double-checking that determination of the peak component 314.

In various aspects, the validity classification label 902(1) to the validity classification label 902(*p*) can be considered as collectively forming the plurality of validity classification labels 902.

Note that the machine learning classifier 802 can, in some embodiments, be configured to receive additional, supplemental, auxiliary, or complementary inputs in addition to purported peaks. Indeed, for any given purported peak, the machine learning classifier 802 can be configured to receive as input not just that given purported peak, but also any suitable numerical properties or attributes associated with that given purported peak. As a non-limiting example, consider the purported peak 602(1). In some instances, the machine learning classifier 802 can receive as input not just the *q*₁ time-intensity tuples that make up the purported peak 602(1), but can also receive: an apex of the purported peak 602(1) (e.g., whatever peak detection technique that is used by the peak component 314 can label, tag, or mark one of the *q*₁ time-intensity tuples as being what it believes is the apex or highest point of the purported peak 602(1)); a starting point of the purported peak 602(1) (e.g., whatever peak detection technique that is used by the peak component 314 can label, tag, or mark one of the *q*₁ time-intensity tuples as denoting what it believes is the leading edge of the purported peak 602(1)); an ending point of the purported peak 602(1) (e.g., whatever peak detection technique that is used by the peak component 314 can label, tag, or mark one of the *q*₁ time-intensity tuples as denoting what it believes is the trailing edge of the purported peak 602(1)); a width of the purported peak 602(1) (e.g., whatever peak detection technique that is used by the peak component 314 can specify how much time it believes is spanned by the purported peak 602(1)); a height of the purported peak 602(1) (e.g., whatever peak detection technique that is used by the peak component 314 can specify how far above a baseline detector signal it believes that the purported peak 602(1) extends); or an alphanumeric identifier uniquely associated with the hardware or model number of the chromatograph-equipped mass spectrometer 302.

In any case, the set of valid peaks 804 can include whichever of the plurality of purported peaks 602 whose validity classification labels indicate are valid. In contrast, the set of invalid peaks 806 can include whichever of the plurality of purported peaks 602 whose validity classification labels indicate are invalid.

In various embodiments, the execution component 318 can electronically perform any suitable mass spectrometry analysis (e.g., any suitable metabolomic, proteomic, statistical, or computational processing procedure or algorithm) on whichever of the plurality of mass spectra 404 that correspond to the set of valid peaks 804 (e.g., that correspond to any time-intensity tuple that belongs to any of the set of valid peaks 804). However, the execution component 318 can electronically refrain from performing any such mass spectrometry analysis on whichever of the plurality of mass spectra 404 that instead correspond to the set of invalid peaks 806 (e.g., that correspond to any time-intensity tuple that belongs to any of the set of invalid peaks 806). In some cases, the execution component 318 can thus be considered as ignoring, disregarding, or discarding whichever of the plurality of mass spectra 404 that correspond to time-intensity tuples that were erroneously detected as peaks by the peak component 314. Accordingly, time and computing resources need not be wasted with further or downstream analysis or processing of the mass spectra of such mistakenly-detected peaks.

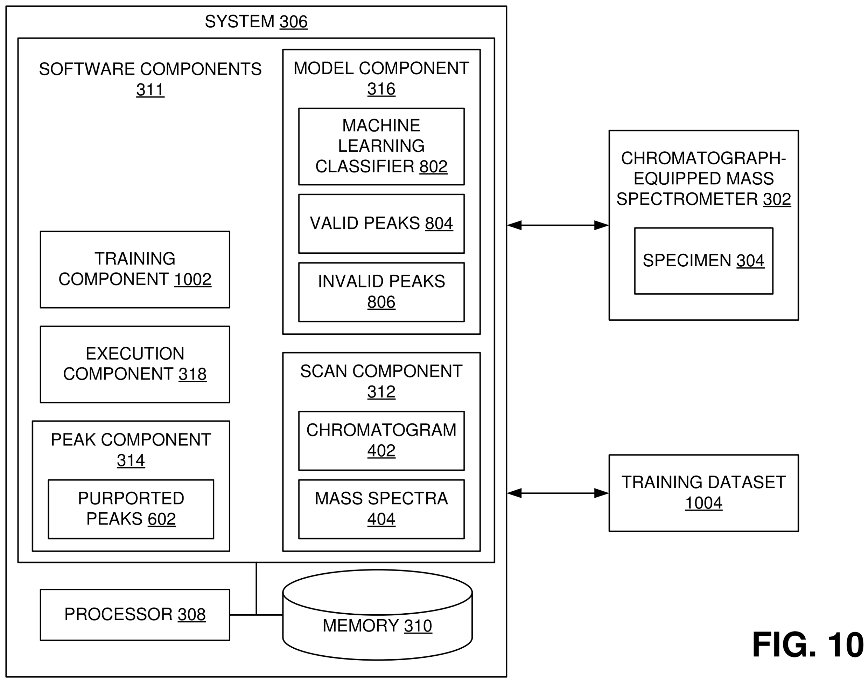

In order for the herein-described post-detection peak validation to be reliably performed in situations where the machine learning classifier 802 exhibits a deep learning internal architecture, the machine learning classifier 802 can first undergo training. A non-limiting example of such training is described with respect to FIGs. 10-12.

FIG. 10 illustrates a block diagram of an example, non-limiting system including a training component and a training dataset that can facilitate post-detection chromatographic peak validation in accordance with one or more embodiments described herein.

In various embodiments, the one or more software components 311 can comprise a training component 1002. In various aspects, the training component 1002 can electronically train the machine learning classifier 802 by leveraging a training dataset 1004.

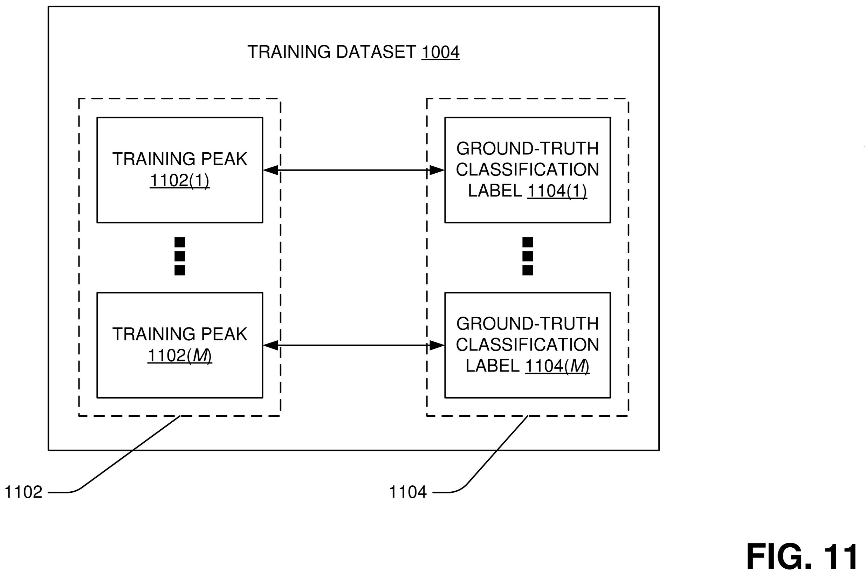

FIG. 11 illustrates an example, non-limiting block diagram of the training dataset 1004 in accordance with one or more embodiments described herein.

In various embodiments, the training dataset 1004 can include a set of training peaks 1102. In various aspects, the set of training peaks 1102 can have a total of m peaks, for any suitable positive integer m: a training peak 1102(1) to a training peak 1102(*m*). In various instances, each of the plurality of training peaks 1102 can be a distinct or respective string or sequence of time-intensity tuples that have been (possibly erroneously) determined to constitute a chromatographic peak. In various cases, any of the set of training peaks 1102 can be obtained from any suitable chromatograms generated by any suitable chromatography devices (e.g., even devices which are different from the chromatograph-equipped mass spectrometer 302) for or with respect to any suitable specimens (e.g., even specimens that are different from the specimen 304).

In various cases, the training dataset 1004 can further include a set of ground-truth classification labels 1104. In various aspects, the set of ground-truth classification labels 1104 can respectively correspond (e.g., in one-to-one fashion) to the set of training peaks 1102. So, since the set of training peaks 1102 can have m peaks, the set of ground-truth classification labels 1104 can have m labels: a ground-truth classification label 1104(1) to a ground-truth classification label 1104(*m*). In various instances, each of the set of ground-truth classification labels 1104 can be considered as a correct or accurate validity classification label that is known or deemed to correspond to a respective one of the set of training peaks 1102. As a non-limiting example, the ground-truth classification label 1104(1) can correspond to the training peak 1102(1). Thus, the ground-truth classification label 1104(1) can be any suitable electronic data (e.g., having the same size, format, or dimensionality as any of the plurality of validity classification labels 902) that correctly or accurately indicates whether the training peak 1102(1) is a valid chromatographic peak or instead an invalid chromatographic peak. As another non-limiting example, the ground-truth classification label 1104(*m*) can correspond to the training peak 1102(*m*)*.* So, the ground-truth classification label 1104(*m*) can be any suitable electronic data that correctly or accurately indicates whether the training peak 1102(*m*) is a valid chromatographic peak or instead an invalid chromatographic peak.

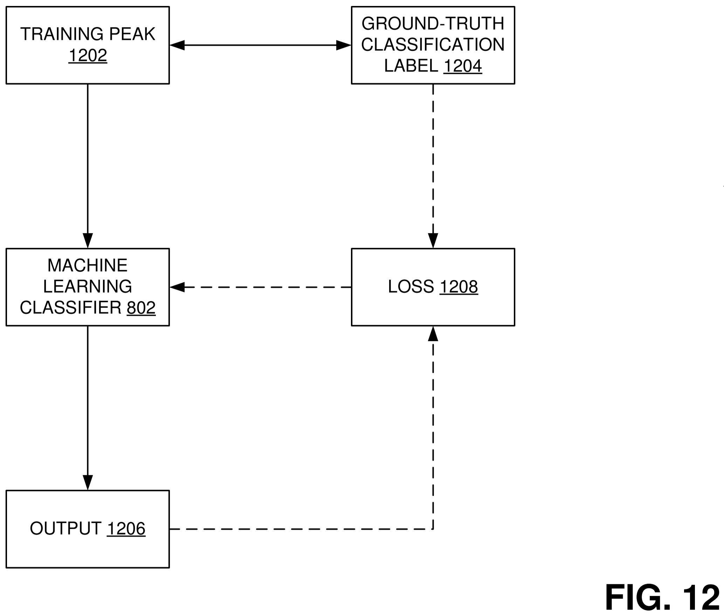

FIG. 12 illustrates an example, non-limiting block diagram showing how the machine learning classifier 802 can be trained in accordance with one or more embodiments described herein.

In various aspects, prior to beginning training, the trainable internal parameters (e.g., convolutional kernels, weight matrices, bias values) of the machine learning classifier 802 can be initialized in any suitable fashion (e.g., via random initialization) by the training component 1002.

In various embodiments, the training component 1002 can select any suitable training peak and corresponding ground-truth classification label from the training dataset 1004. These can respectively be referred to as a training peak 1202 and a ground-truth classification label 1204.

In various aspects, the training component 1002 can cause the machine learning classifier 802 to be executed on the training peak 1202, thereby causing the machine learning classifier 802 to produce an output 1206. More specifically, in some cases, the training peak 1202 can be fed or routed to the input layer of the machine learning classifier 802, the training peak 1202 can complete a forward pass through the one or more hidden layers of the machine learning classifier 802, and the output layer of the machine learning classifier 802 can compute the output 1206 based on activation maps or feature maps provided by the one or more hidden layers of the machine learning classifier 802.

Note that the format, size, or dimensionality of the output 1206 can be dictated by the number, arrangement, sizes, or other characteristics of the neurons, convolutional kernels, attention blocks, or other internal parameters of the output layer (or of any other layers) of the machine learning classifier 802. Accordingly, the output 1206 can be forced to have any desired format, size, or dimensionality, by adding, removing, or otherwise adjusting characteristics of the output layer (or of any other layers) of the machine learning classifier 802.

In various aspects, the output 1206 can be considered as the predicted or inferred validity classification label that the machine learning classifier 802 has synthesized based on the training peak 1202. In contrast, the ground-truth classification label 1204 can be considered as whatever correct or accurate validity classification label that is known or deemed to correspond to the training peak 1202. Note that, if the machine learning classifier 802 has so far undergone no or little training, then the output 1206 can be highly inaccurate. In other words, the output 1206 can be very different from the ground-truth classification label 1204.

In various aspects, a loss 1208 (e.g., mean absolute error, mean squared error, cross-entropy error) between the output 1206 and the ground-truth classification label 1204 can be computed by the training component 1002. In various instances, the training component 1002 can incrementally update the trainable internal parameters of the machine learning classifier 802 via backpropagation (e.g., stochastic gradient descent) based on the loss 1208.

In various cases, such execution-and-update procedure can be repeated for any suitable number of training peaks (e.g., for each training peak in the training dataset 1004). This can ultimately cause the trainable internal parameters of the machine learning classifier 802 to become iteratively optimized for accurately distinguishing or discriminating between valid chromatographic peaks and invalid chromatographic peaks. In various aspects, any suitable training batch sizes, any suitable error/loss functions, or any suitable training termination criteria can be utilized during such training.

Although the herein disclosure mainly describes the machine learning classifier 802 as being trained in supervised fashion, this is a mere non-limiting example for ease of explanation and illustration. In various embodiments, any other suitable training paradigms can be used to train the machine learning classifier 802, such as unsupervised training, semi-supervised training, or reinforcement learning, any of which may be federated or unfederated.

FIG. 13 illustrates example, non-limiting experimental results in accordance with one or more embodiments described herein.

Numeral 1302 illustrates a string or sequence of time-intensity tuples (denoted by a solid, unbroken line) that has been identified as a chromatographic peak (e.g., signified by a shaded bell-curve) via a curve fitting peak detection technique. An embodiment of the machine learning classifier 802 was executed on the string or sequence of time-intensity tuples shown by numeral 1302, and such execution yielded a validity classification label indicating VALID. Note that this makes sense, since the solid, unbroken line closely matches the shaded bell curve.

Numeral 1304 illustrates a string or sequence of time-intensity tuples (denoted by a solid, unbroken line) that has been identified as a chromatographic peak (e.g., signified by a shaded bell-curve) via a curve fitting peak detection technique. An embodiment of the machine learning classifier 802 was executed on the string or sequence of time-intensity tuples shown by numeral 1304, and such execution yielded a validity classification label indicating INVALID. Note that this makes sense, since the solid, unbroken line is extremely noisy and does not closely match the shaded bell curve.

Numeral 1306 illustrates two separate strings or sequences of time-intensity tuples that have been identified as chromatographic peaks by a curve fitting peak detection technique. An embodiment of the machine learning classifier 802 was executed on both of those strings or sequences of time-intensity tuples, and such execution yielded two validity classification labels indicating INVALID.

These experimental results help to demonstrate how various embodiments described herein can be usefully implemented to distinguish valid peaks from invalid peaks, so that time and resources are not wasted analyzing the mass spectra of invalid peaks.

Although various embodiments described herein refer to chromatograms as being sequences of intensities that are organized according to retention time, these are mere non-limiting examples for ease of explanation and illustration. In various aspects, retention time in any embodiment can be readily replaced with a unitless retention index as appropriate.

In various instances, machine learning algorithms or models can be implemented in any suitable way to facilitate any suitable aspects described herein. To facilitate some of the above-described machine learning aspects of various embodiments, consider the following discussion of artificial intelligence (Al). Various embodiments described herein can employ artificial intelligence to facilitate automating one or more features or functionalities. The components can employ various Al-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) *= confidence*(*class*). Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

In order to provide additional context for various embodiments described herein, FIG. 14 and the following discussion are intended to provide a brief, general description of a suitable computing environment 1400 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14, the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system (BIOS) can be stored in a non-volatile memory such as ROM, erasable programmable read only memory (EPROM), EEPROM, which BIOS contains the basic routines that help to transfer information between elements within the computer 1402, such as during startup. The RAM 1412 can also include a high-speed RAM such as static RAM for caching data.

The computer 1402 further includes an internal hard disk drive (HDD) 1414 (e.g., EIDE, SATA), one or more external storage devices 1416 (e.g., a magnetic floppy disk drive (FDD) 1416, a memory stick or flash drive reader, a memory card reader, etc.) and a drive 1420, e.g., such as a solid state drive, an optical disk drive, which can read or write from a disk 1422, such as a CD-ROM disc, a DVD, a BD, etc. Alternatively, where a solid state drive is involved, disk 1422 would not be included, unless separate. While the internal HDD 1414 is illustrated as located within the computer 1402, the internal HDD 1414 can also be configured for external use in a suitable chassis (not shown). Additionally, while not shown in environment 1400, a solid state drive (SSD) could be used in addition to, or in place of, an HDD 1414. The HDD 1414, external storage device(s) 1416 and drive 1420 can be connected to the system bus 1408 by an HDD interface 1424, an external storage interface 1426 and a drive interface 1428, respectively. The interface 1424 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine (VM) of multiple VMs hosted at computer 1402. Furthermore, operating system 1430 can provide runtime environments, such as the Java runtime environment or the .NET framework, for applications 1432. Runtime environments are consistent execution environments that allow applications 1432 to run on any operating system that includes the runtime environment. Similarly, operating system 1430 can support containers, and applications 1432 can be in the form of containers, which are lightweight, standalone, executable packages of software that include, e.g., code, runtime, system tools, system libraries and settings for an application.

Further, computer 1402 can be enable with a security module, such as a trusted processing module (TPM). For instance with a TPM, boot components hash next in time boot components, and wait for a match of results to secured values, before loading a next boot component. This process can take place at any layer in the code execution stack of computer 1402, e.g., applied at the application execution level or at the operating system (OS) kernel level, thereby enabling security at any level of code execution.

A user can enter commands and information into the computer 1402 through one or more wired/wireless input devices, e.g., a keyboard 1438, a touch screen 1440, and a pointing device, such as a mouse 1442. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, etc.

A monitor 1446 or other type of display device can be also connected to the system bus 1408 via an interface, such as a video adapter 1448. In addition to the monitor 1446, a computer typically includes other peripheral output devices (not shown), such as speakers, printers, etc.

The computer 1402 can operate in a networked environment using logical connections via wired or wireless communications to one or more remote computers, such as a remote computer(s) 1450. The remote computer(s) 1450 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1452 is illustrated. The logical connections depicted include wired/wireless connectivity to a local area network (LAN) 1454 or larger networks, e.g., a wide area network (WAN) 1456. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1454 through a wired or wireless communication network interface or adapter 1458. The adapter 1458 can facilitate wired or wireless communication to the LAN 1454, which can also include a wireless access point (AP) disposed thereon for communicating with the adapter 1458 in a wireless mode.

When used in a WAN networking environment, the computer 1402 can include a modem 1460 or can be connected to a communications server on the WAN 1456 via other means for establishing communications over the WAN 1456, such as by way of the Internet. The modem 1460, which can be internal or external and a wired or wireless device, can be connected to the system bus 1408 via the input device interface 1444. In a networked environment, program modules depicted relative to the computer 1402 or portions thereof, can be stored in the remote memory/storage device 1452. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above, such as but not limited to a network virtual machine providing one or more aspects of storage or processing of information. Generally, a connection between the computer 1402 and a cloud storage system can be established over a LAN 1454 or WAN 1456 e.g., by the adapter 1458 or modem 1460, respectively. Upon connecting the computer 1402 to an associated cloud storage system, the external storage interface 1426 can, with the aid of the adapter 1458 or modem 1460, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 15 is a schematic block diagram of a sample computing environment 1500 with which the disclosed subject matter can interact. The sample computing environment 1500 includes one or more client(s) 1510. The client(s) 1510 can be hardware or software (e.g., threads, processes, computing devices). The sample computing environment 1500 also includes one or more server(s) 1530. The server(s) 1530 can also be hardware or software (e.g., threads, processes, computing devices). The servers 1530 can house threads to perform transformations by employing one or more embodiments as described herein, for example. One possible communication between a client 1510 and a server 1530 can be in the form of a data packet adapted to be transmitted between two or more computer processes. The sample computing environment 1500 includes a communication framework 1550 that can be employed to facilitate communications between the client(s) 1510 and the server(s) 1530. The client(s) 1510 are operably connected to one or more client data store(s) 1520 that can be employed to store information local to the client(s) 1510. Similarly, the server(s) 1530 are operably connected to one or more server data store(s) 1540 that can be employed to store information local to the servers 1530.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects are described in the following examples.

EXAMPLE 1: A system can comprise a processor that can execute computer-executable components stored in a non-transitory computer-readable memory, wherein the computer-executable components can comprise: a scan component that can cause a chromatography device coupled to a mass spectrometer to scan a specimen, thereby yielding a chromatogram and mass spectra; a peak component that can identify, via a peak detection algorithm, a plurality of purported peaks in the chromatogram; a model component that can separate, via execution of a machine learning classifier on respective ones of the plurality of purported peaks, the plurality of purported peaks into a set of valid peaks and a set of invalid peaks; and an execution component that can perform a mass spectrometry analysis on first portions of the mass spectra that correspond to the set of valid peaks but not on second portions of the mass spectra that correspond to the set of invalid peaks

EXAMPLE 2: The system of any preceding example can be implemented, wherein, for a first purported peak in the plurality of purported peaks, the model component can feed the first purported peak or one or more properties of the first purported peak as input to the machine learning classifier, and wherein the machine learning classifier can produce as output a classification label indicating whether the first purported peak is a valid peak or an invalid peak.

EXAMPLE 3: The system of any preceding example can be implemented, wherein the one or more properties of the first purported peak can comprise a first time-intensity tuple representing an apex of the first purported peak.

EXAMPLE 4: The system of any preceding example can be implemented, wherein the one or more properties of the first purported peak can further comprise: a second time-intensity tuple representing a start of the first purported peak; or a third time-intensity tuple representing an end of the first purported peak.

EXAMPLE 5: The system of any preceding example can be implemented, wherein the one or more properties of the first purported peak can further comprise a width of the first purported peak.

EXAMPLE 6: The system of any preceding example can be implemented, wherein the one or more properties of the first purported peak can further comprise a height of the first purported peak.

EXAMPLE 7: The system of any preceding example can be implemented, wherein the one or more properties of the first purported peak can further comprise a hardware identifier associated with the chromatography device.

EXAMPLE 8: The system of any preceding example can be implemented, wherein the computer-executable components can further comprise: a training component that can train the machine learning classifier on a training dataset, where the training dataset can comprise: a plurality of training peaks; and a plurality of ground-truth classification labels respectively corresponding to the plurality of training peaks, each of the plurality of ground-truth classification labels dichotomously indicating that a respective training peak is valid or invalid.

In various embodiments, any combination or combinations of examples 1-8 can be implemented.

EXAMPLE 9: A computer-implemented method can comprise: causing, by a device operatively coupled to a processor, a chromatography device coupled to a mass spectrometer to scan a specimen, thereby yielding a chromatogram and mass spectra; identifying, by the device and via a peak detection algorithm, a plurality of purported peaks in the chromatogram; separating, by the device and via execution of a machine learning classifier on respective ones of the plurality of purported peaks, the plurality of purported peaks into a set of valid peaks and a set of invalid peaks; and performing, by the device, a mass spectrometry analysis on first portions of the mass spectra that correspond to the set of valid peaks but not on second portions of the mass spectra that correspond to the set of invalid peaks.

EXAMPLE 10: The computer-implemented method of any preceding example can be implemented, wherein, for a first purported peak in the plurality of purported peaks, the device can feed the first purported peak or one or more properties of the first purported peak as input to the machine learning classifier, and wherein the machine learning classifier can produce as output a classification label indicating whether the first purported peak is a valid peak or an invalid peak.

EXAMPLE 11: The computer-implemented method of any preceding example can be implemented, wherein the one or more properties of the first purported peak can comprise a first time-intensity tuple representing an apex of the first purported peak.

EXAMPLE 12: The computer-implemented method of any preceding example can be implemented, wherein the one or more properties of the first purported peak can further comprise: a second time-intensity tuple representing a start of the first purported peak; or a third time-intensity tuple representing an end of the first purported peak.

EXAMPLE 13: The computer-implemented method of any preceding example can be implemented, wherein the one or more properties of the first purported peak can further comprise a width of the first purported peak.

EXAMPLE 14: The computer-implemented method of any preceding example can be implemented, wherein the one or more properties of the first purported peak can further comprise a height of the first purported peak.

EXAMPLE 15: The computer-implemented method of any preceding example can be implemented, wherein the one or more properties of the first purported peak can further comprise a hardware identifier associated with the chromatography device.

EXAMPLE 16: The computer-implemented method of any preceding example can be implemented, further comprising: training, by the device, the machine learning classifier on a training dataset, where the training dataset can comprise: a plurality of training peaks; and a plurality of ground-truth classification labels respectively corresponding to the plurality of training peaks, each of the plurality of ground-truth classification labels dichotomously indicating that a respective training peak is valid or invalid.

In various embodiments, any combination or combinations of examples 9-16 can be implemented.

EXAMPLE 17: A computer program product for facilitating post-detection chromatographic peak validation can comprise a non-transitory computer-readable memory having program instructions embodied therewith. In various aspects, the program instructions can be executable by a processor to cause the processor to: cause a chromatography device coupled to a mass spectrometer to scan a specimen, thereby yielding a chromatogram and mass spectra; identify, via a peak detection algorithm, a plurality of purported peaks in the chromatogram; separate, via execution of a machine learning classifier on respective ones of the plurality of purported peaks, the plurality of purported peaks into a set of valid peaks and a set of invalid peaks; and perform a mass spectrometry analysis on first portions of the mass spectra that correspond to the set of valid peaks but not on second portions of the mass spectra that correspond to the set of invalid peaks.

EXAMPLE 18: The computer program product of any preceding example can be implemented, wherein, for a first purported peak in the plurality of purported peaks, the processor can feed the first purported peak or one or more properties of the first purported peak as input to the machine learning classifier, and wherein the machine learning classifier can produce as output a classification label indicating whether the first purported peak is a valid peak or an invalid peak.

EXAMPLE 19: The computer program product of any preceding example can be implemented, wherein the one or more properties of the first purported peak can comprise a first time-intensity tuple representing an apex of the first purported peak.

EXAMPLE 20: The computer program product of any preceding example can be implemented, wherein the program instructions can be further executable to cause the processor to: train the machine learning classifier on a training dataset, where the training dataset can comprise: a plurality of training peaks; and a plurality of ground-truth classification labels respectively corresponding to the plurality of training peaks, each of the plurality of ground-truth classification labels dichotomously indicating that a respective training peak is valid or invalid.

In various embodiments, any combination or combinations of examples 17-20 can be implemented.

In various embodiments, any combination or combinations of examples 1-20 can be implemented.

## Claims

1. A computer-implemented method, comprising:
causing, by a device operatively coupled to a processor, a chromatography device coupled to a mass spectrometer to scan a specimen, thereby yielding a chromatogram and mass spectra;
identifying, by the device and via a peak detection algorithm, a plurality of purported peaks in the chromatogram;
separating, by the device and via execution of a machine learning classifier on respective ones of the plurality of purported peaks, the plurality of purported peaks into a set of valid peaks and a set of invalid peaks; and
performing, by the device, a mass spectrometry analysis on first portions of the mass spectra that correspond to the set of valid peaks but not on second portions of the mass spectra that correspond to the set of invalid peaks.

2. The computer-implemented method of claim 1, wherein, for a first purported peak in the plurality of purported peaks, the device feeds the first purported peak or one or more properties of the first purported peak as input to the machine learning classifier, and wherein the machine learning classifier produces as output a classification label indicating whether the first purported peak is a valid peak or an invalid peak.

3. The computer-implemented method of claim 2, wherein the one or more properties of the first purported peak comprise a first time-intensity tuple representing an apex of the first purported peak.

4. The computer-implemented method of claim 3, wherein the one or more properties of the first purported peak further comprise:
a second time-intensity tuple representing a start of the first purported peak; or
a third time-intensity tuple representing an end of the first purported peak.

5. The computer-implemented method of claim 3, wherein the one or more properties of the first purported peak further comprise a width of the first purported peak.

6. The computer-implemented method of claim 3, wherein the one or more properties of the first purported peak further comprise a height of the first purported peak.

7. The computer-implemented method of claim 3, wherein the one or more properties of the first purported peak further comprise a hardware identifier associated with the chromatography device.

8. The computer-implemented method of any preceding claim, further comprising:
training, by the device, the machine learning classifier on a training dataset, where the training dataset comprises:
a plurality of training peaks; and
a plurality of ground-truth classification labels respectively corresponding to the plurality of training peaks, each of the plurality of ground-truth classification labels dichotomously indicating that a respective training peak is valid or invalid.

9. A computer program for facilitating post-detection chromatographic peak validation, the computer program comprising program instructions executable by a processor to cause the processor to carry out the method steps of any one of claims 1-8.

10. A computer program product comprising a non transitory computer readable memory in which is stored the computer program of claim 9.

11. A system comprising a memory in which is stored the computer program of claim 9, and a processor configured to execute the method steps of the said computer program of claim 9.
